(19) Europäisches Patentamt
European Patent Office
Office européen des brevets

(11) **EP 3 536 543 B1**

(12) **EUROPEAN PATENT SPECIFICATION**

(45) Date of publication and mention
of the grant of the patent:
**08.09.2021 Bulletin 2021/36**

(21) Application number: **19156949.0**

(22) Date of filing: **13.02.2019**

(51) Int Cl.:
*B60L 53/10* (2019.01)      *B60L 58/10* (2019.01)
*B60L 58/18* (2019.01)      *H02J 7/00* (2006.01)
*B60L 58/22* (2019.01)      *H02J 7/14* (2006.01)
*H02J 7/34* (2006.01)

(54) **ELECTRICALLY DRIVEN VEHICLE AND METHOD OF CONTROLLING ELECTRICALLY DRIVEN VEHICLE**

ELEKTRISCH ANGETRIEBENES FAHRZEUG UND VERFAHREN ZUR STEUERUNG DES ELEKTRISCH ANGETRIEBENEN FAHRZEUGS

VÉHICULE À PROPULSION ÉLECTRIQUE ET PROCÉDÉ DE COMMANDE DE VÉHICULE À PROPULSION ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.03.2018 JP 2018039916**

(43) Date of publication of application:
**11.09.2019 Bulletin 2019/37**

(73) Proprietor: **TOYOTA JIDOSHA KABUSHIKI KAISHA**
**Toyota-shi**
**Aichi-ken, 471-8571 (JP)**

(72) Inventors:
• **NIIMI, Yoshitaka**
  **Aichi-ken, 471-8571 (JP)**
• **HIROE, Yoshihiko**
  **Aichi-ken, 471-8571 (JP)**
• **KAITA, Keiji**
  **Aichi-ken, 471-8571 (JP)**

(74) Representative: **J A Kemp LLP**
**14 South Square**
**Gray's Inn**
**London WC1R 5JJ (GB)**

(56) References cited:
**US-A1- 2017 088 009      US-A1- 2017 264 108**

**Description**

BACKGROUND OF THE INVENTION

1. Field of the Invention

The present disclosure relates to an electrically driven vehicle mounted with a charge control device that controls the charge of an electrical storage device, and a method of controlling the electrically driven vehicle.

2. Description of Related Art

In Japanese Patent Application Publication No. 2017-192272 (JP 2017-192272 A), there is disclosed an electrically driven vehicle equipped with an electrical storage device that includes a plurality of assembled batteries. The plurality of the assembled batteries that are mounted in this electrically driven vehicle are connected in parallel to an electric load such as a drive unit or the like of the electrically driven vehicle.

US 2017/264108 A1 discloses an electric power supply system includes a first power storage, a second power, an input, and a processor. Information including priority information is to be input through the input. The processor is configured to determine whether the first power storage is charged up to a first target residual capacity and the second power storage is charged up to a second target residual capacity by a timing at which at least one of the first power storage and the second power storage starts discharging. The processor is configured to charge either one of or both of the first power storage and the second power storage according to the priority information when it is determined that the first power storage is not charged up to the first target residual capacity and/or the second power storage is not charged up to the second target residual capacity by the timing.

US 2017/088009 A1 discloses a drive system includes a first energy storage, a second energy storage, a driver, and a controller. The first energy storage is charged and discharged. A first amount of heat is generated by charging and discharging the first energy storage. The second energy storage is charged and discharged. The second amount of heat is generated by charging and discharging the second energy storage and is smaller than the first amount of heat.

SUMMARY OF THE INVENTION

There are some electrically driven vehicles each of which is configured to be connectable to a direct-current (DC) charger outside the vehicle and is configured to be able to perform a process of charging an in-vehicle electrical storage device with DC electric power supplied from the DC charger (hereinafter referred to also as "DC charge"). In some electrically driven vehicles in which DC charge is possible, limitation control for limiting the charge electric power supplied from the DC charger when the state of charge (SOC) of an assembled battery is high is performed to protect the electrical storage device.

On the other hand, when DC charge is carried out with the aid of a DC charger installed in a public charge station or the like, a user can demand to charge the electrical storage device with a certain amount of electric power in a relatively short period at the beginning of DC charge (e.g., a period of several minutes to several dozens of minutes, which will hereinafter be referred to also as "an initial period").

In the case where the plurality of the assembled batteries are connected in parallel to the electric load of the electrically driven vehicle as in the electrically driven vehicle disclosed in Japanese Patent Application Publication No. 2017-192272 (JP 2017-192272 A), even when the same electric power is used in the electrically driven vehicle, the SOC of each of the assembled batteries is assumed to be held higher than in the case where a single assembled battery is connected alone to the electric load of the electrically driven vehicle.

Therefore, in the case where the plurality of the assembled batteries are connected in parallel to the electric load of the electrically driven vehicle, the start of DC charge is assumed to be likely with the SOC's of the plurality of the assembled batteries being high. Then, the charge electric power supplied from the DC charger at the beginning of DC charge is limited through the aforementioned limitation control, so there is an apprehension that the amount of charge in the initial period may become small. Therefore, it may be impossible to charge the electrical storage device in the initial period until the SOC thereof reaches an SOC desired by the user.

The present disclosure increases the amount of charge that is possible in a certain period at the beginning of charge in charging an in-vehicle electrical storage device with the aid of a DC electric power supply outside an electrically driven vehicle.

A first aspect of the invention is an electrically driven vehicle as specified in the claims.

With the aforementioned configuration, the adjustment control for intentionally making the electrical storage amount of the first electrical storage body smaller than the electrical storage amount of the second electrical storage body is performed before the start of charge by the direct current electric power supply. Thus, the electrical storage amount of the first electrical storage body can be made smaller in advance than the electrical storage amount of the second electrical storage body before the start of charge by the direct current electric power supply. Then, when charge by the direct current electric power supply is carried out, the first electrical storage body is charged in priority to the second electrical storage body. Thus, charge can be carried out with large charge electric power in the initial period. Therefore, the amount of charge that is possible in the initial period can be increased.

In the electrically driven vehicle, the electronic control unit may be configured to perform the adjustment control when a first condition and a second condition are both satisfied. The first condition may be a condition that charge by the direct current electric power supply is not carried out. The second condition may be a condition that charge by the direct current electric power supply is predicted to be carried out.

For example, if the adjustment control is always performed when the electrically driven vehicle runs, the loss caused through the inputting/outputting of charge electric power to/from the respective electrical storage bodies can become larger than when the adjustment control is not performed. With the aforementioned configuration, the adjustment control is performed only when direct current charge of the electrical storage device is predicted to be carried out in the near future. Therefore, the adjustment control is restrained from being performed unnecessarily. Thus, the loss can be restrained from being caused through the inputting/outputting of electric power to/from the respective assembled batteries, while increasing the amount of charge that is possible in the initial period.

In the electrically driven vehicle, the electronic control unit may be configured to predict that charge by the direct current electric power supply is carried out when a user of the electrically driven vehicle performs an operation of issuing a command to perform the adjustment control.

With the aforementioned configuration, the adjustment control is performed in accordance with the user's command operation. Thus, the adjustment control can be performed according to the user's intention.

In the electrically driven vehicle, the electrical storage device may include a switching relay that is configured to switch a connection relationship between the plurality of the electrical storage bodies and the direct current electric power supply when the electrically driven vehicle and the direct current electric power supply are connected to each other. The adjustment control may include first control and second control. The first control may be control for controlling the switching relay such that the second electrical storage body is charged with regenerative electric power through regeneration control when a rotating electrical machine connected to a drive shaft of the electrically driven vehicle is subjected to the regeneration control. The second control may be control for controlling the switching relay such that electric power used in power running control is supplied from the first electrical storage body when the rotating electrical machine is subjected to the power running control.

With the aforementioned configuration, the electronic control unit supplies regenerative electric power of the rotating electrical machine to the second electrical storage body by controlling the switching relay. Besides, the electronic control unit supplies the electric power used for power running of the rotating electrical machine from the first electrical storage body, by controlling the switching relay. In this manner, an adjustment is made such that the difference between the electrical storage amount of the first electrical storage body and the electrical storage amount of the second electrical storage body becomes large, by controlling the switching relay in accordance with the control state of the rotating electrical machine. Thus, the adjustment control can be performed without complicating the configuration of the charge control device of the electrically driven vehicle.

The electrically driven vehicle may further include a voltage conversion device provided between the plurality of the electrical storage bodies. The adjustment control may include third control for supplying electric power from the first electrical storage body to the second electrical storage body via the voltage conversion device.

With the aforementioned configuration, electric power can be exchanged between the plurality of the electrical storage bodies through the use of the voltage conversion device provided between the plurality of the electrical storage bodies. Thus, the adjustment control can be performed regardless of the control state of the rotating electrical machine.

A second aspect of the invention is a method of controlling an electrically driven vehicle as specified in the claims.

With the aforementioned configuration, the adjustment control for intentionally making the electrical storage amount of the first electrical storage body smaller than the electrical storage amount of the second electrical storage body is performed before the start of charge by the direct current electric power supply. Thus, the electrical storage amount of the first electrical storage body can be made smaller in advance than the electrical storage amount of the second electrical storage body before the start of charge by the direct current electric power supply. Then, when charge is carried out by the direct current electric power supply, the first electrical storage body is charged in priority to the second electrical storage body. Thus, charge can be carried out with large charge electric power in the initial period. Therefore, the amount of charge that is possible in the initial period can be increased.

With the aforementioned configuration, the amount of charge that is possible in the certain period at the beginning of charge can be increased, in charging the in-vehicle electrical storage device with the aid of the direct current electric power supply outside the electrically driven vehicle.

BRIEF DESCRIPTION OF THE DRAWINGS

Features, advantages, and technical and industrial significance of exemplary embodiments of the invention will be described below with reference to the accompanying drawings, in which like numerals denote like elements, and wherein:

FIG. 1 is an overall configuration view of a charge system that includes a DC charger and an electrically driven vehicle that is mounted with a charge control device according to the first embodiment;

FIG. 2 is a view schematically showing time-dependent changes in SOC, charge current, and charge amount in the case where DC charge of an electrical storage device is carried out before performing SOC adjustment control;

FIG. 3 is a view schematically showing time-dependent changes in SOC, charge current, and charge amount in the case where DC charge of the electrical storage device is carried out after performing SOC adjustment control;

FIG. 4 is a flowchart showing a process that is performed by an ECU of the electrically driven vehicle according to the first embodiment;

FIG. 5 is a flowchart showing a detailed process in S180 (DC charge) of FIG. 4;

FIG. 6 is a view schematically showing the control of the charge control device according to the first embodiment;

FTG. 7 is a view comparing a battery loss of assembled batteries in a parallel state with a battery loss of the assembled batteries in performing SOC adjustment control;

FIG. 8 is a flowchart showing a process that is performed by the ECU of the electrically driven vehicle according to a first modification example;

FIG. 9 is a flowchart showing a process that is performed by the ECU in a cancellation process according to the first modification example;

FIG. 10 is a flowchart showing a process that is performed by the ECU of the electrically driven vehicle according to a second modification example;

FIG. 11 is a flowchart showing a process that is performed by the ECU of the electrically driven vehicle according to a third modification example;

FIG. 12 is a flowchart showing a process that is performed by the ECU of the electrically driven vehicle according to a fourth modification example;

FIG. 13 is a flowchart showing a process that is performed by the ECU of the electrically driven vehicle according to a fifth modification example;

FIG. 14 is an overall configuration view of a charge system that includes a DC charger and an electrically driven vehicle that is mounted with a charge control device according to the second embodiment;

FIG. 15 is a flowchart showing a process that is performed by the ECU of the electrically driven vehicle according to the second embodiment;

FIG. 16 is a flowchart showing a process that is performed by the ECU in a cancellation process according to the second embodiment;

FIG. 17 is an overall configuration view of a charge system that includes a DC charger and an electrically driven vehicle that is mounted with a charge control device according to the third embodiment; and

FIG. 18 is a flowchart showing a process that is performed by the ECU in a cancellation process according to the third embodiment.

DETAILED DESCRIPTION OF EMBODIMENTS

The first embodiment will be described hereinafter in detail with reference to the drawings. Incidentally, like or equivalent components are denoted by like reference symbols in the drawings, and the description thereof will not be repeated.

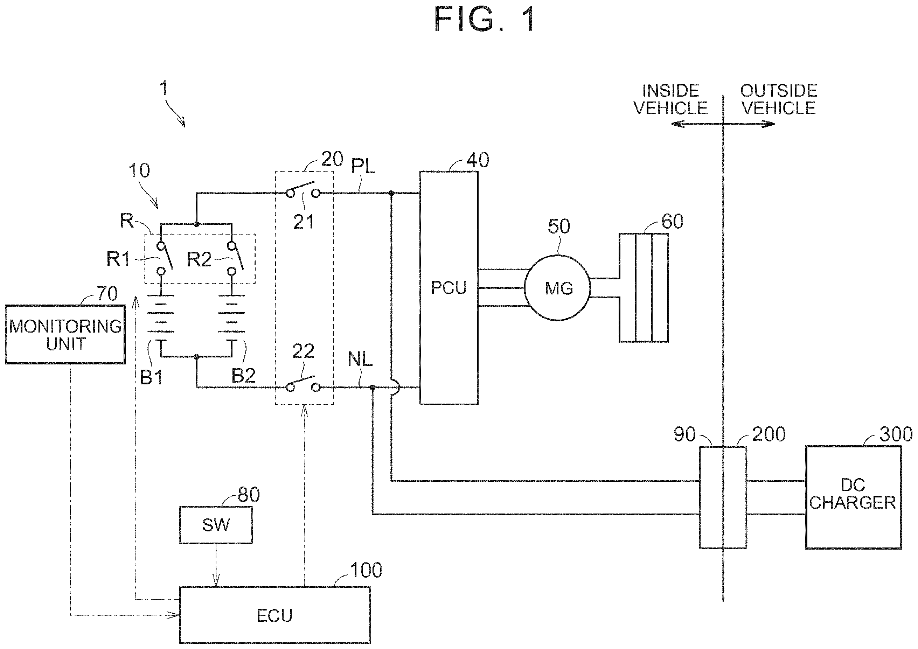

FIG. 1 is an overall configuration view of a charge system that includes a DC charger 300 and an electrically driven vehicle 1 that is mounted with a charge control device according to the first embodiment. The electrically driven vehicle 1 is an electrically driven vehicle such as an electric vehicle, a plug-in hybrid vehicle or the like. The electrically driven vehicle 1 is configured to be connectable to the DC charger 300. The electrically driven vehicle 1 is configured to be able to carry out "DC charge" for charging an in-vehicle electrical storage device with a DC electric power supplied from the DC charger 300.

The electrically driven vehicle 1 is equipped with an electrical storage device 10, a power control unit (a PCU) 40, a motor-generator 50, a driving wheel 60, a vehicle inlet 90, an electronic control unit (an ECU) 100, a main relay device 20, and a monitoring unit 70.

The electrical storage device 10 includes two assembled batteries B1 and B2 and switching relays R1 and R2. The assembled battery B1 is obtained by stacking a plurality of batteries. Each of the batteries is, for example, a secondary battery such as a nickel hydride battery, a lithium-ion battery or the like. Besides, each of the batteries may have a liquid electrolyte or a solid electrolyte between a positive electrode and a negative electrode. In the first embodiment, an example in which each of the batteries is a lithium-ion secondary battery having a liquid electrolyte will be described.

In addition to the electric power supplied from the DC charger 300 and input from the vehicle inlet 90, the electric power generated by the motor-generator 50 is stored in the assembled battery B1. The same holds true for the assembled battery B2 as well as the assembled battery B1. Incidentally, in the first embodiment, an example in which the electrical storage device 10 includes the two assembled batteries B1 and B2 will be described, but the number of assembled batteries included in the electrical storage device 10 may not necessarily be two. The electrical storage device 10 may include three or more assembled batteries. Besides, each of the assembled batteries is not required to be obtained by stacking a plurality of batteries, but may be configured as a single battery. Besides, a rechargeable DC electric power supply is sufficient as each of the assembled batteries B1 and B2. A large-capacity capacitor can also be adopted as each of the assembled batteries B1 and B2.

The switching relays R1 and R2 are configured such that their on/off states can be controlled separately from each other. The switching relay R1 is provided between a main relay 21 of the main relay device 20 and a positive electrode terminal of the assembled battery B1. The switching relay R2 is provided between the main relay 21 of the main relay device 20 and a positive electrode terminal of the assembled battery B2.

In the first embodiment, when both the switching relays R1 and R2 are turned on, the assembled batteries B1 and B2 are connected in parallel to the main relay device 20. When the switching relay R1 is turned on and the switching relay R2 is turned off, both ends of the assembled battery B1 are electrically connected to the main relay device 20, and both ends of the assembled battery B2 are electrically disconnected from the main relay device 20. When the switching relay R1 is turned off and the switching relay R2 is turned on, both the ends of the assembled battery B1 are electrically disconnected from the main relay device 20, and both the ends of the assembled battery B2 are electrically connected to the main relay device 20.

Transistors such as insulated gate bipolar transistors (IGBT's), metal oxide semiconductor field effect transistors (MOSFET's), or the like are used as the switching relays R1 and R2. Besides, mechanical relays may be used as the switching relays R1 and R2.

The PCU 40 is a comprehensive term for electric power conversion devices for driving the motor-generator 50 upon receiving electric power from the electrical storage device 10. For example, the PCU 40 includes an inverter for driving the motor-generator 50, a converter that steps up the electric power output from the electrical storage device 10 and that supplies this electric power to the inverter, and the like.

The motor-generator (the MG) 50 is an AC rotating electrical machine, for example, a permanent magnet-type synchronous electric motor that is equipped with a rotor in which a permanent magnet is embedded. The rotor of the motor-generator 50 is mechanically connected to the driving wheel 60 via a motive power transmission gear (not shown). When the electrically driven vehicle 1 is in regenerative braking operation, the motor-generator 50 can generate electric power through a rotating force of the driving wheel 60, and outputs the generated electric power to the PCU 40. The motor-generator 50 and the driving wheel 60 will hereinafter be referred to also as "a drive unit" comprehensively. Besides, the PCU 40 and the motor-generator 50 are electric loads of the electrically driven vehicle 1.

The vehicle inlet 90 is configured to be connectable to a charge connector 200 of the DC charger 300 for supplying DC electric power to the electrically driven vehicle 1. At the time of DC charge, the vehicle inlet 90 receives the electric power supplied from the DC charger 300.

The main relay device 20 is provided between the electrical storage device 10 and the drive unit. The main relay device 20 includes the main relay 21 and a main relay 22. The main relay 21 and the main relay 22 are provided on a positive electrode line PL and a negative electrode line NL respectively.

When the main relays 21 and 22 are open, no electric power can be supplied from the electrical storage device 10 to the drive unit, and there is established a READY-OFF state where the electrically driven vehicle 1 cannot run. When the main relays 21 and 22 are closed, electric power can be supplied from the electrical storage device 10 to the drive unit, and there can be established a READY-ON state where the electrically driven vehicle 1 can run.

The monitoring unit 70 detects an inter-terminal voltage VB of the electrical storage device 10, an inter-terminal voltage of the assembled battery B1, and an inter-terminal voltage of the assembled battery B2, and outputs detected values thereof to the ECU 100. Besides, the monitoring unit 70 detects a current IB input/output to/from the electrical storage device 10, a current IB1 input/output to/from the assembled battery B1, and a current IB2 input/output to/from the assembled battery B2, and outputs detected values thereof to the ECU 100. Incidentally, the current IB input to the electrical storage device 10 will hereinafter be referred to also as a charge current IB, and the current IB output from the electrical storage device 10 will hereinafter be referred to also as a discharge current IB. The same holds true for the assembled batteries B1 and B2.

Although not shown in the drawing, the ECU 100 includes a central processing unit (a CPU), a memory, and an input/output buffer. Signals are input to the ECU 100 from respective sensors and the like. The ECU 100 outputs control signals to respective pieces of equipment, and controls the respective pieces of equipment. Incidentally, the control of these pieces of equipment may not necessarily be performed through a software process, but can also be performed by structuring a dedicated piece of hardware (an electronic circuit).

The ECU 100 controls the on/off states of the switching relays R1 and R2 and the main relays 21 and 22 included in the main relay device 20.

The ECU 100 controls the charge of the electrical storage device 10. In concrete terms, the ECU 100 performs limitation control for limiting the charge electric power supplied from the DC charger 300 when the SOC's of the assembled batteries B1 and B2 are high. In the first embodiment, a certain charge voltage is estimated to be applied from the DC charger 300 at the time of DC charge, and the ECU 100 limits the charge electric power by controlling the charge current supplied from the DC charger 300. This limitation control is performed for the following reason. When the SOC's of the assembled batteries are high, a lithium deposition voltage at which metal lithium is deposited on the surface of the negative electrode of each of the batteries and an open-circuit voltage (an OCV) of each of the batteries are close to each other. Therefore, if DC charge is always carried out with a constant charge current without subjecting the charge current to limitation control, for example, when the charge voltage is constant, there is an apprehension that the OCV of each of the batteries may exceed the lithium deposition voltage. Thus, limitation control is performed to prevent the OCV of each of the batteries from exceeding the lithium deposition voltage when the SOC's of the assembled batteries B1 and B2 are high.

The ECU 100 transmits, to the DC charger 300, a charge current command value indicating a current value required of the DC charger 300. At the time of DC charge of the electrically driven vehicle 1, the charge current command value is transmitted from the electrically driven vehicle 1 on a certain cycle. The ECU 100 controls the charge current by changing the charge current command value. That is, the ECU 100 performs limitation control by changing the charge current command value.

The DC charger 300 is a charger for supplying DC electric power to the electrically driven vehicle 1. The charger 300 outputs a charge current corresponding to the charge current command value received from the electrically driven vehicle 1.

The assembled batteries B1 and B2 included in the electrical storage device 10 mounted in the electrically driven vehicle 1 are assumed to be used while being connected in parallel to the electric loads of the electrically driven vehicle 1 with a view to lengthening the cruising distance. A state where the assembled batteries B1 and B2 are used while being connected in parallel to the electric loads will hereinafter be referred to also as "a parallel state".

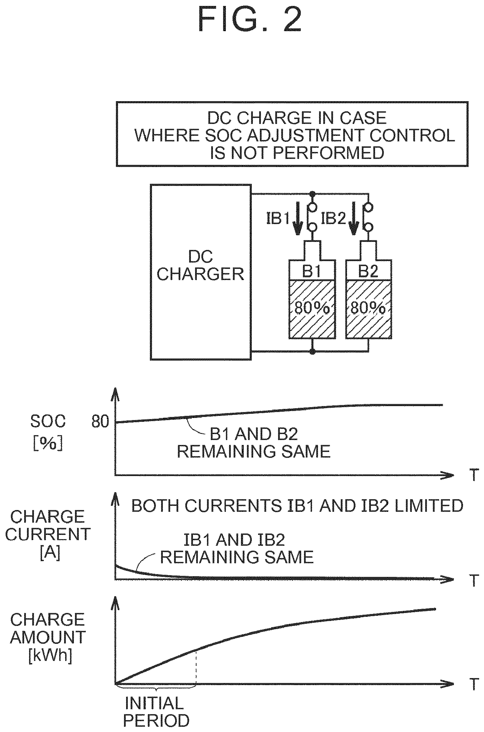

FIG. 2 is a view schematically showing time-dependent changes in SOC, charge current, and charge amount in the case where DC charge of the electrical storage device 10 is carried out before performing SOC adjustment control. In FIG. 2, an example in which the assembled batteries B1 and B2 are in the parallel state and DC charge is started when both the SOC's of the assembled batteries B1 and B2 are equal to 80% will be described.

As described above, the ECU 100 performs limitation control at the time of DC charge of the electrical storage device 10 (the assembled batteries B1 and B2). Therefore, when the SOC's of the assembled batteries B1 and B2 are equal to 80%, which is relatively high, the charge currents IB1 and IB2 are limited by the ECU 100, and DC charge is started with the small charge currents IB1 and IB2. Then, as shown in FIG. 2, the charge currents IB1 and IB2 are controlled to be further reduced as the SOC's of the assembled batteries B1 and B2 approach a full-charge value (e.g., 100%) from 80%.

Therefore, the amount of charge that is possible in "an initial period", namely, a relatively short period (e.g., a period of about several minutes to about several dozens of minutes) at the beginning of DC charge may become small.

On the other hand, when DC charge is carried out by the DC charger 300 installed at a public charge station or the like, a user can demand a certain amount of charge in the initial period. When the assembled batteries B1 and B2 are used in the parallel state, there may be a case where the user's demand cannot be met.

Thus, in the first embodiment, SOC adjustment control for intentionally making an SOC1 of the assembled battery B1 lower than an SOC2 of the assembled battery B2 is performed when DC charge of the electrical storage device 10 is not carried out. In concrete terms, SOC adjustment control is the control for making the SOC1 of the assembled battery B1 equal to an electrical storage amount that is lower than the SOC2 of the assembled battery B2 by a predetermined amount or more. This predetermined amount will be described later. Incidentally, SOC adjustment control is not limited to making the SOC1 of the assembled battery B1 low and making the SOC2 of the assembled battery B2 high. In SOC adjustment control, the SOC1 of the assembled battery B1 may be made high, and the SOC2 of the assembled battery B2 may be made low.

In SOC adjustment control, when the motor-generator 50 is subjected to regeneration control, the switching relays R1 and R2 are controlled to electrically disconnect the assembled battery B1 from the electric loads and electrically connect the assembled battery B2 to the electric loads. Thus, the regenerative electric power of the motor-generator 50 is supplied to the assembled battery B2. In SOC adjustment control, when the motor-generator 50 is subjected to power running control, the switching relays R1 and R2 are controlled to electrically connect the assembled battery B1 to the electric loads and electrically disconnect the assembled battery B2 from the electric loads. Thus, the electric power used for power running of the motor-generator 50 is supplied from the assembled battery B1.

By performing SOC adjustment control, the SOC1 of the assembled battery B1 becomes low, and the SOC2 of the assembled battery B2 becomes high. Therefore, an adjustment is made such that the difference between the SOC's of the assembled battery B1 and the assembled battery B2 becomes large.

After making the difference between the SOC's of the assembled battery B1 and the assembled battery B2 large by performing the above-mentioned SOC adjustment control, DC charge of the assembled battery B1 is carried out in priority to DC charge of the assembled battery B2. Thus, the degree to which the charge current is limited through limitation control in the initial period can be made small. Therefore, DC charge can be carried out with large charge electric power in the initial period, so the amount of charge that is possible in the initial period can be increased.

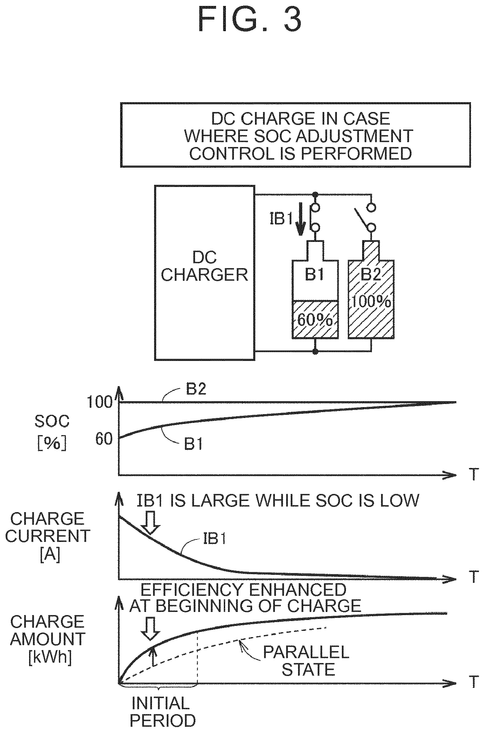

FIG. 3 is a view schematically showing time-dependent changes in SOC, charge current, and charge amount in the case where DC charge of the electrical storage device 10 is carried out after performing SOC adjustment control. In FIG. 3, the same electric power as in the case of FIG. 2 is assumed to have been used in the electrically driven vehicle 1 before the start of DC charge. In FIG. 3, DC charge is started with the SOC's of the assembled battery B1 and the assembled battery B2 being equal to 60% and 100% respectively.

In FIG. 3, the switching relay R1 is turned on, and the switching relay R2 is turned off. Thus, DC charge of the assembled battery B1 whose SOC has become low due to SOC adjustment control can be carried out in priority to DC charge of the assembled battery B2. That is, in FIG. 3, only DC charge of the assembled battery B1 is carried out.

The SOC of the assembled battery B1 is equal to 60%, so DC charge is carried out with the charge current IB that is larger than in the case where the SOC's of the assembled batteries B1 and B2 are equal to 80% as described with reference to FIG. 2. In concrete terms, DC charge is carried out with the charge current IB (= IB1) in FIG. 3, which is larger than the charge current IB (= IB1+IB2) in FIG. 2. Therefore, through the performance of SOC adjustment control before carrying out DC charge, the amount of charge that is possible in the initial period can be made larger than in the case where SOC adjustment control is not performed before carrying out DC charge.

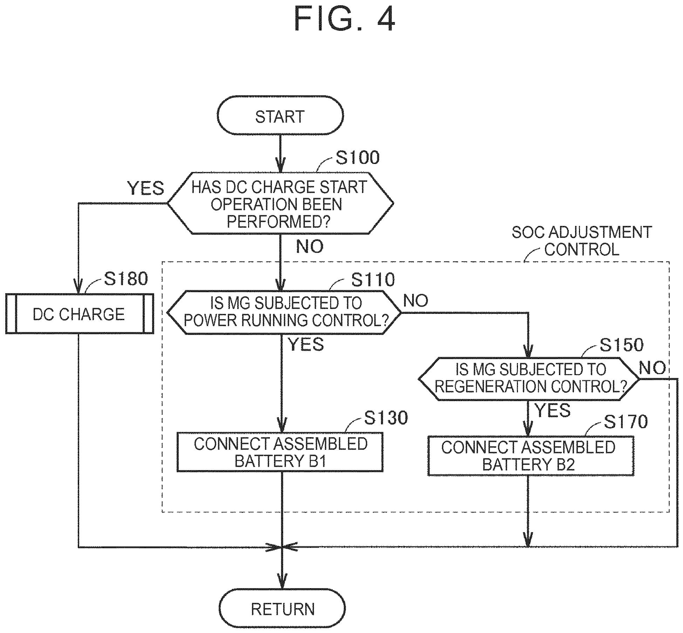

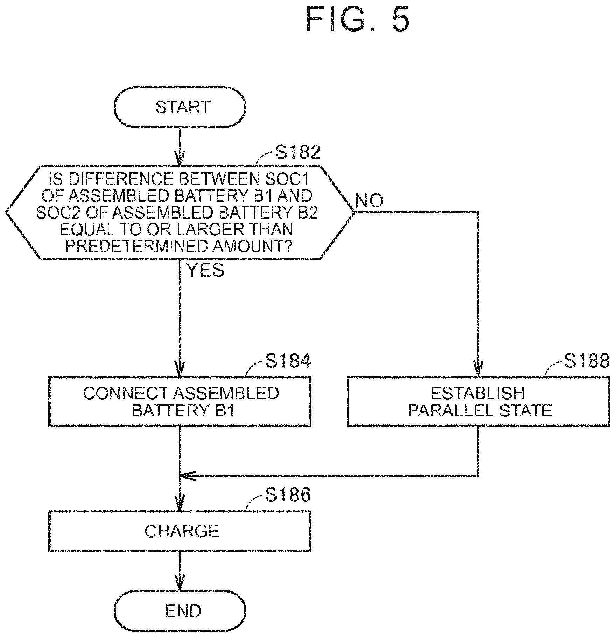

FIG. 4 is a flowchart showing a process that is performed by the ECU 100 of the electrically driven vehicle 1 according to the first embodiment. A case where respective steps in the flowchart shown in FIG. 4 are realized through a software process by the ECU 100 will be described. However, one, some or all of the steps may be realized through a piece of hardware (an electric circuit) created in the ECU 100. The same holds true for FIGS. 5, 8 to 13, 15, 16, and 18.

The ECU 100 determines whether or not a DC charge start operation has been performed (step 100, the word "step" will be abbreviated hereinafter as "S"). The DC charge start operation includes, for example, an operation of connecting the charge connector 200 to the vehicle inlet 90, an operation of opening a charge lid covering the vehicle inlet 90, and the like.

If it is determined that the DC charge start operation has not been performed (NO in S100), the ECU 100 performs SOC adjustment control. In concrete terms, SOC adjustment control is the processing of S110 to S170.

If it is determined that the DC charge start operation has not been performed (NO in S100), the ECU 100 determines whether or not the motor-generator 50 is subjected to power running control (S110).

If it is determined that the motor-generator 50 is subjected to power running control (YES in S110), the ECU 100 electrically connects the assembled battery B1 to the electric loads (S130). In concrete terms, the ECU 100 turns on the switching relay R1, and turns off the switching relay R2. Thus, the electric power used for power running of the motor-generator 50 is supplied from the assembled battery B1.

If it is determined in S110 that the motor-generator 50 is not subjected to power running control (NO in S110), the ECU 100 determines whether or not the motor-generator 50 is subjected to regeneration control (S150).

If it is determined that the motor-generator 50 is subjected to regeneration control (YES in S150), the ECU 100 electrically connects the assembled battery B2 to the electric loads (S170). In concrete terms, the ECU 100 turns off the switching relay R1, and turns on the switching relay R2. Thus, the regenerative electric power of the motor-generator 50 is supplied to the assembled battery B2.

If it is determined in S150 that the motor-generator 50 is not subjected to regeneration control (NO in S150), the ECU 100 returns the process.

Thus, the ECU 100 performs SOC adjustment control by controlling the switching relays R1 and R2, and makes an adjustment such that the difference between the SOC's of the assembled battery B1 and the assembled battery B2 becomes large, by making the SOC of the assembled battery B1 low and making the SOC of the assembled battery B2 high.

If it is determined in S100 that the DC charge start operation has been performed (YES in S100), the ECU 100 starts DC charge (S180). The details of the process of DC charge will be described using FIG. 5.

FIG. 5 is a flowchart showing a detailed process in S180 (DC charge) of FIG. 4.

The ECU 100 determines whether or not the difference between the SOC1 of the assembled battery B1 and the SOC2 of the assembled battery B2 is equal to or larger than a predetermined amount (S182). The predetermined amount is set as a threshold at which DC charge can be performed with larger charge electric power in the initial period when DC charge of only the assembled battery B1 whose SOC has become lower than the SOC of the assembled battery B2 is carried out than when DC charge of the assembled batteries B1 and B2 in the parallel state is carried out. That is, if the difference between the SOC1 of the assembled battery B1 and the SOC2 of the assembled battery B2 is equal to or larger than the predetermined amount, the amount of charge that is possible in the initial period can be increased more by carrying out DC charge of only the assembled battery B1. On the other hand, if the difference between the SOC1 of the assembled battery B1 and the SOC2 of the assembled battery B2 is smaller than the predetermined amount, the amount of charge that is possible in the initial period is increased more by carrying out DC charge of the assembled batteries B1 and B2 in the parallel state.

If it is determined that the difference between the SOC1 of the assembled battery B1 and the SOC2 of the assembled battery B2 is equal to or larger than the predetermined amount (YES in S182), the ECU 100 turns on the switching relay R1, turns off the switching relay R2, and electrically connects the assembled battery B1 to the vehicle inlet 90 (SI84). Then, the ECU 100 carries out DC charge of the assembled battery B1 (S186).

If it is determined in S182 that the difference between the SOC1 of the assembled battery B1 and the SOC2 of the assembled battery B2 is not equal to or larger than the predetermined amount (NO in S182), the ECU 100 turns on the switching relay R1, turns on the switching relay R2, and renders the assembled batteries B1 and B2 in the parallel state (S188). Then, the ECU 100 carries out DC charge of the assembled battery B1 and the assembled battery B2 (S186).

As described above, the ECU 100 makes an adjustment such that the difference between the SOC1 and the SOC2 becomes large before carrying out DC charge (SOC1 < SOC2). Then, when the difference between the SOC1 of the assembled battery B1 and the SOC2 of the assembled battery B2 is equal to or larger than the predetermined amount at the time of DC charge, the ECU 100 carries out DC charge of the assembled battery B1 in priority to DC charge of the assembled battery B2. Thus, the degree to which the charge current is limited through limitation control in the initial period can be made small. Therefore, DC charge can be carried out with the large charge current IB in the initial period, and the amount of charge that is possible in the initial period can be increased.

Besides, when the difference between the SOC1 of the assembled battery B1 and the SOC2 of the assembled battery B2 becomes smaller than the predetermined amount due to DC charge, the ECU 100 renders the assembled batteries B1 and B2 in the parallel state, and carries out DC charge. Thus, the amount of charge per unit time can be increased.

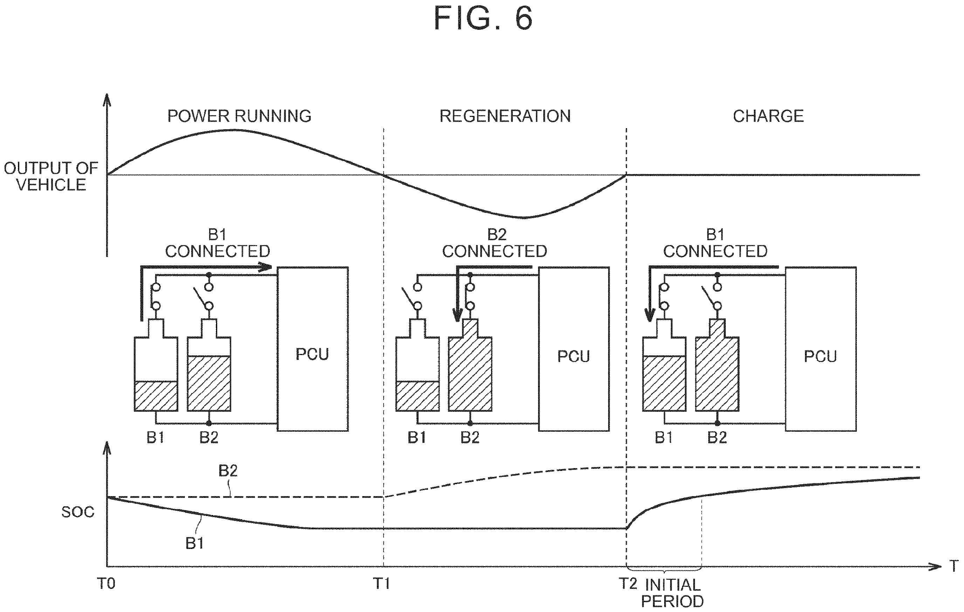

FIG. 6 is a view schematically showing the control of the charge control device according to the first embodiment. FIG. 6 schematically shows time-dependent changes in the SOC's of the assembled batteries B1 and B2 at the time of power running control, regeneration control, and charge of the motor-generator 50.

At the time of power running, the ECU 100 included in the charge control device electrically connects the assembled battery B1 to the electric loads, and electrically disconnects the assembled battery B2 from the electric loads. Thus, the electric power of the assembled battery B1 is used for power running of the electrically driven vehicle 1 (the motor-generator 50). Therefore, as shown in FIG. 6, the SOC1 of the assembled battery B1 decreases from a timing T0 to a timing T1. The SOC2 of the assembled battery B2 remains unchanged from the timing T0 to the timing T1, because the assembled battery B2 is electrically disconnected from the electric loads.

At the time of regeneration control, the ECU 100 electrically disconnects the assembled battery B1 from the electric loads, and electrically connects the assembled battery B2 to the electric loads. Thus, the electric power resulting from regeneration of the motor-generator 50 is supplied to the assembled battery B2, so the SOC2 of the assembled battery B2 increases from the timing T1 to a timing T2. The SOC1 of the assembled battery B1 remains unchanged from the timing T1 to the timing T2, because the assembled battery B1 is electrically disconnected from the electric loads.

Thus, the ECU 100 performs control in such a manner as to use the electric power of the assembled battery B1 for power running of the motor-generator 50 at the time of power running control, performs control such that the electric power resulting from regeneration of the motor-generator 50 is supplied to the assembled battery B2 at the time of regeneration control, and thereby makes an adjustment such that the difference between the SOC1 of the assembled battery B1 and the SOC2 of the assembled battery B2 becomes large.

Then, at the time of DC charge, the ECU 100 electrically connects the assembled battery B1 to the vehicle inlet 90, and electrically disconnects the assembled battery B2 from the vehicle inlet 90. Thus, the degree to which the charge current is limited through limitation control in the initial period can be made small by carrying out DC charge of the assembled battery B1 whose SOC has been made low through SOC adjustment control. Therefore, as shown in FIG. 3, charge with the large charge electric power is made possible in the initial period. Therefore, as shown in FIG. 6, the amount of charge can be increased in the initial period after the start of charge (at the timing T2), so the amount of increase in the SOC1 of the assembled battery B1 can be made large in the initial period.

In the first embodiment, the example in which the electrically driven vehicle 1 always performs SOC adjustment control in the case where DC charge is not carried out has been described. However, when the battery loss of the assembled batteries B1 and B2 at the time when SOC adjustment control is performed and the battery loss of the assembled batteries B1 and B2 in the parallel state (the loss at the time when SOC adjustment control is not performed) are compared with each other, the battery loss of the assembled batteries B1 and B2 at the time when SOC adjustment control is performed is larger than the other. Therefore, when SOC adjustment control is always performed in the electrically driven vehicle 1 in the case where DC charge is not carried out, the loss of the electrical storage device 10 may become large.

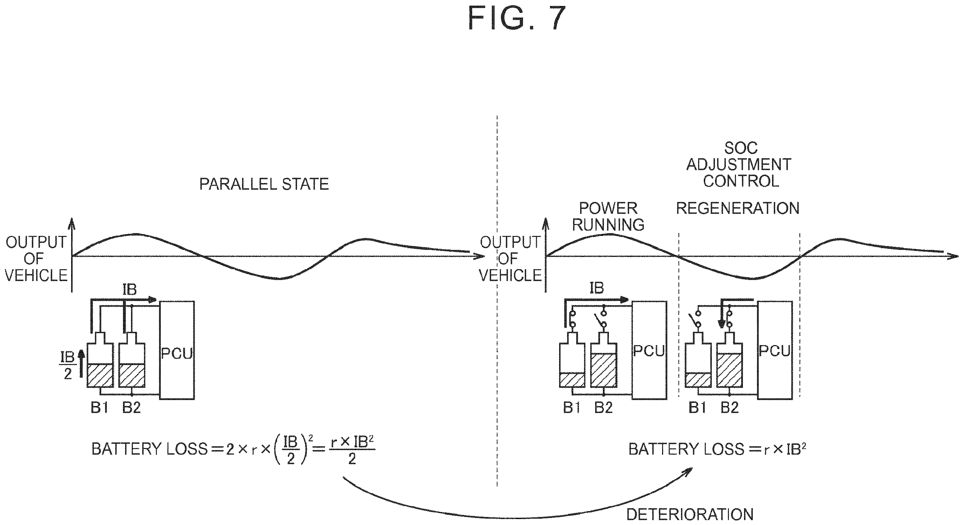

FIG. 7 is a view comparing a battery loss L1 of the assembled batteries B1 and B2 in the parallel state with a battery loss L2 of the assembled batteries B1 and B2 at the time when SOC adjustment control is performed. FIG. 7 shows calculation formulae for calculating the battery loss L1 of the assembled batteries B1 and B2 in the parallel state and the battery loss L2 of the assembled batteries B1 and B2 at the time when SOC adjustment control is performed, with the electric power being constant.

In the parallel state, the battery loss L1 is expressed by an equation (1) shown below, for example, provided that the internal resistance of each of the assembled batteries B1 and B2 is denoted by "r" and that the discharge current from the electrical storage device 10 is denoted by "IB" at the time of power running of the motor-generator 50.

$$L1 = 2 \times r \times (IB/2)^2 \qquad \ldots (1)$$

When SOC adjustment control is performed, the battery loss L2 is expressed by an equation (2) shown below, for example, provided that the internal resistance of each of the assembled batteries B1 and B2 is denoted by "r" and that the discharge current from the electrical storage device 10 is denoted by "IB" at the time of power running of the motor-generator 50.

$$L2 = r \times (IB)^2 \qquad \ldots (2)$$

Thus, the battery loss L2 of the assembled batteries B1 and B2 at the time when SOC adjustment control is performed is larger than the battery loss L1 of the assembled batteries B1 and B2 in the parallel state. Therefore, if SOC adjustment control is always performed, the loss of the electrical storage device 10 may become large.

Hence, in the first modification example, an example in which SOC adjustment control is performed only when a specific condition is fulfilled will be described. In concrete terms, the electrically driven vehicle 1 is further equipped with a performance switch (hereinafter referred to also as "a SW") 80, and SOC adjustment control is performed only when a push operation of the SW 80 is performed.

The SW 80 is a switch for starting the performance of SOC adjustment control. The SW 80 is provided in, for example, the interior of the electrically driven vehicle 1, and is configured as a push-type mechanical switch or the like. When the user performs the push operation, the SW 80 transmits, to the ECU 100, a push signal indicating that the push operation has been performed. When the push operation of the SW 80 is performed, DC charge of the electrically driven vehicle 1 is predicted to be carried out in the near future. Therefore, the ECU 100 performs SOC adjustment control upon receiving the push signal.

Upon receiving the push signal, the ECU 100 stores a history of reception of the push signal until a cancellation process that will be described later is performed. When the cancellation process is performed, the ECU 100 rests the history.

As described above, SOC adjustment control is performed only when the user performs the push operation of the SW 80. Therefore, SOC adjustment control can be performed according to the user's intention. Besides, SOC adjustment control is performed only when necessary, and is hence prevented from being unnecessarily performed. Therefore, the battery loss of the assembled batteries B1 and B2 (the loss of the electrical storage device 10) can be restrained from being caused.

Besides, there may also be cases where the user inadvertently performs the push operation of the SW 80 without being aware thereof. When SOC adjustment control is continuously performed in such a case, the loss of the electrical storage device 10 becomes large, and may cause disadvantages to the user. Thus, in the first modification example, when a certain condition is fulfilled, a process of intentionally making the difference between the SOC1 of the assembled battery B1 and the SOC2 of the assembled battery B2 small (hereinafter referred to also as "a cancellation process") is performed. In concrete terms, the cancellation process is a process of making the difference between the SOC1 of the assembled battery B1 and the SOC2 of the assembled battery B2 smaller than a prescribed amount that will be described later. Thus, when the user inadvertently performs the push operation of the SW 80 without being aware thereof, the loss of the electrical storage device 10 can be restrained from being caused, by cancelling SOC adjustment control. Incidentally, the SW 80 may not necessarily be a push-type mechanical switch. For example, the SW 80 may be configured to be displayed on a display unit of a navigation system of the electrically driven vehicle 1. In this case, the on state of the SW 80 is detected through the user's operation on the navigation system.

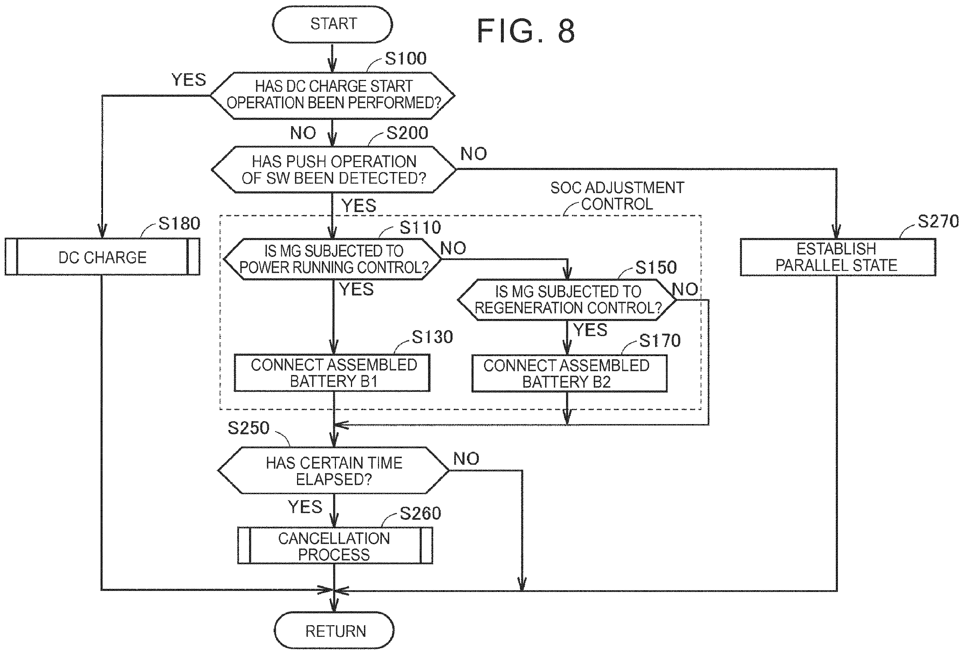

FIG. 8 is a flowchart showing a process that is performed by the ECU 100 of the electrically driven vehicle 1 according to the first modification example. The flowchart shown in FIG. 8 is obtained by adding S200 (a step of determining whether or not SOC adjustment control should be performed), S270, S250 (a step of determining whether or not the cancellation process should be performed), and S260 (the cancellation process) to the flowchart of FIG. 4. The other steps are identical to the steps in the flowchart of FIG. 4 respectively, so the description thereof will not be repeated.

If it is determined in S100 that the DC charge start operation has not been performed (NO in S100), the ECU 100 determines whether or not the push operation of the SW 80 has been detected (S200).

If it is determined that the push operation of the SW 80 has been detected (YES in S200), the ECU 100 performs SOC adjustment control. Incidentally, in S200, the ECU 100 determines that the push operation of the SW 80 has been detected, also when the history of reception of the push signal is stored.

The ECU 100 determines whether or not a certain time has elapsed since the start of the performance of SOC adjustment control (S250). If it is determined that the certain time has elapsed (YES in S250), the ECU 100 performs the cancellation process that will be described later (S260). If it is determined that the certain time has not elapsed (NO in S250), the ECU 100 returns the process.

As described hitherto, it is determined whether or not the cancellation process should be performed, depending on whether or not the certain time has elapsed since the start of the performance of SOC adjustment control, for the following reason. When the performance of SOC adjustment control is continued, the loss of the electrical storage device 10 can become large, so the user may probably perform the push operation of the SW 80 slightly before making an attempt to carry out DC charge. When DC charge has nevertheless not been started yet even after the lapse of the certain time since the start of the performance of SOC adjustment control, the user is estimated to have performed the push operation of the SW 80 by mistake. Therefore, it is determined whether or not the cancellation process should be performed, depending on whether or not the certain time has elapsed since the start of the performance of SOC adjustment control. Incidentally, the certain time can be set as any length of time.

On the other hand, if it is determined that the push operation of the SW 80 has not been performed (NO in S200), the ECU 100 renders the assembled batteries B1 and B2 in the parallel state (S270). In concrete terms, the ECU 100 turns on the switching relay R1, turns on the switching relay R2, and renders the assembled batteries B1 and B2 in the parallel state.

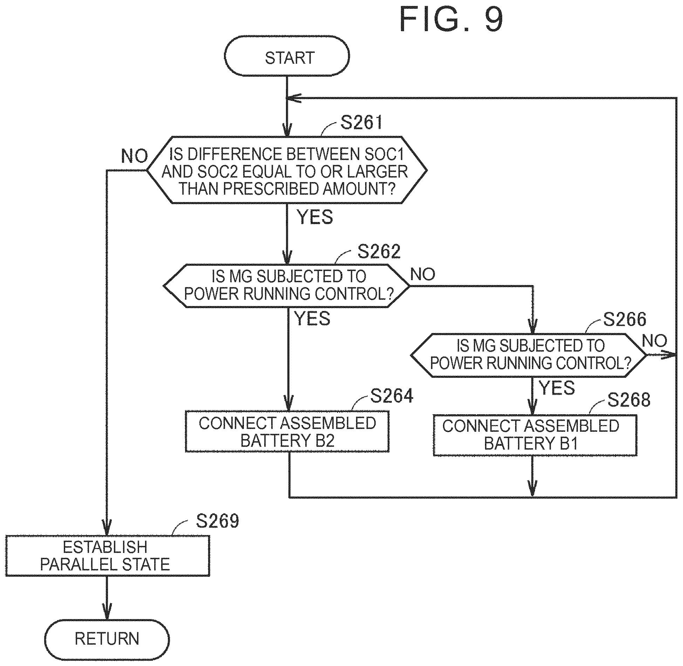

FIG. 9 is a flowchart showing a process that is performed by the ECU 100 in the cancellation process. The process of this flowchart is performed when it is determined that a certain time has elapsed since the start of the performance of SOC adjustment control.

The ECU 100 determines whether or not there is a difference equal to or larger than a prescribed amount between the SOC1 of the assembled battery B1 and the SOC2 of the assembled battery B2 (S261). When the assembled batteries B1 and B2 are rendered in the parallel state with a large difference between the SOC1 of the assembled battery B1 and the SOC2 of the assembled battery B2, an excessive current may instantaneously flow from the assembled battery B2 (with the higher SOC) to the assembled battery B1 (with the lower SOC). When an excessive current flows through the assembled batteries B1 and B2 and a connection path of the assembled batteries B1 and B2, there is an apprehension that cables, components and the like through which the excessive current flows (hereinafter referred to also as "energization components") may be exposed to influences such as malfunction and the like. The prescribed amount is set as a threshold for determining that the assembled batteries B1 and B2 and the energization components of the assembled batteries B1 and B2 are not influenced even when the assembled batteries B1 and B2 are rendered in the parallel state with the SOC1 of the assembled battery B1 and the SOC2 of the assembled battery B2 different from each other.

If it is determined that there is a difference equal to or larger than the prescribed amount between the SOC1 of the assembled battery B1 and the SOC2 of the assembled battery B2 (YES in S261), the ECU 100 determines whether or not the motor-generator 50 is subjected to power running control (S262).

If it is determined that the motor-generator 50 is subjected to power running control (YES in S262), the ECU 100 electrically connects the assembled battery B2 to the electric loads (S264). In concrete terms, the ECU 100 turns off the switching relay R1, and turns on the switching relay R2. Thus, the electric power used for power running of the motor-generator 50 is supplied from the assembled battery B2. Then, the ECU 100 returns the process to S261.

If it is determined in S262 that the motor-generator 50 is not subjected to power running control (NO in S262), the ECU 100 determines whether or not the motor-generator 50 is subjected to regeneration control (S266).

If it is determined that the motor-generator 50 is subjected to regeneration control (YES in S266), the ECU 100 electrically connects the assembled battery B1 to the electric loads (S268). In concrete terms, the ECU 100 turns on the switching relay R1, and turns off the switching relay R2. Thus, the regenerative electric power of the motor-generator 50 is supplied to the assembled battery B1. Then, the ECU 100 returns the process to S261.

If it is determined in S150 that the motor-generator 50 is not subjected to regeneration control (NO in S266), the ECU 100 returns the process to S261.

If it is determined in S261 that there is no difference equal to or larger than the prescribed amount between the SOC1 of the assembled battery B1 and the SOC2 of the assembled battery B2 (NO in S261), the ECU 100 renders the assembled battery B1 and the assembled battery B2 in the parallel state (S269). In concrete terms, the ECU 100 turns on the switching relay R1, turns on the switching relay R2, and electrically connects the assembled battery B1 and the assembled battery B2 to the electric loads of the electrically driven vehicle 1.

As described above, when the assembled batteries B1 and B2 are rendered in the parallel state with a large difference between the SOC1 of the assembled battery B1 and the SOC2 of the assembled battery B2, an excessive current may instantaneously flow from the assembled battery B2 (with the higher SOC) to the assembled battery B1 (with the lower SOC). When an excessive current flows through the assembled batteries B1 and B2 and the connection path of the assembled batteries B1 and B2, there is an apprehension that the energization components may be exposed to influences such as malfunction and the like.

Therefore, when there is a difference equal to or larger than the prescribed amount between the SOC1 of the assembled battery B1 and the SOC2 of the assembled battery B2 in the cancellation process, the ECU 100 performs control such that the electric power used for power running of the motor-generator 50 is supplied from the assembled battery B2, and that the regenerative electric power of the motor-generator 50 is supplied to the assembled battery B1. Thus, the ECU 100 performs the control of making the difference between the SOC1 of the assembled battery B1 and the SOC2 of the assembled battery B2 small, and performs the process of making the difference therebetween smaller than the prescribed amount (the cancellation process). Then, when the difference between the SOC1 of the assembled battery B1 and the SOC2 of the assembled battery B2 becomes smaller than the prescribed amount, the ECU 100 renders the assembled batteries B1 and B2 in the parallel state. The performance of the cancellation process in this manner makes it possible to render the assembled batteries B1 and B2 in the parallel state without influencing the energization components.

In the first modification example, the example in which the SW 80 is provided and it is determined, in accordance with the push operation of the SW 80, whether or not SOC adjustment control should be performed has been described. However, it may not necessarily be determined through the use of the SW 80 whether or not SOC adjustment control should be performed. In the second modification example, another exemplary method of determining whether or not SOC adjustment control should be performed will be described.

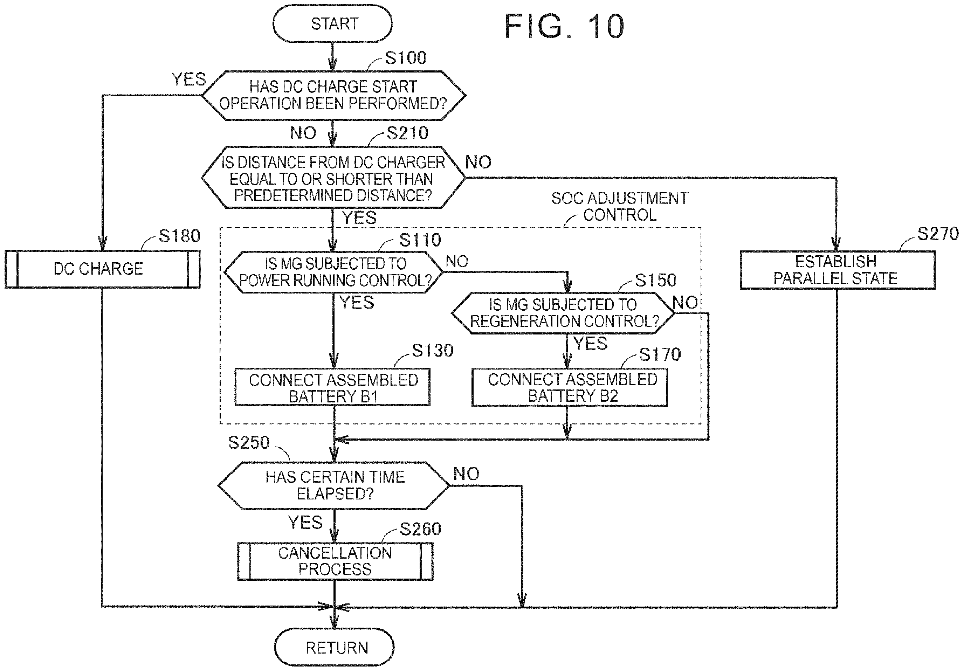

FIG. 10 is a flowchart showing a process that is performed by the ECU 100 of the electrically driven vehicle 1 according to the second modification example. The flowchart shown in FIG. 10 is obtained by replacing S200 with S210 in the flowchart of FIG. 8. The other steps are identical to the other steps in the flowchart of FIG. 8 respectively, so the description thereof will not be repeated.

If it is determined in S100 that the DC charge start operation has not been performed (NO in S100), the ECU 100 determines whether or not the distance between the electrically driven vehicle 1 and the DC charger 300 is equal to or shorter than a predetermined distance (S210).

If it is determined that the distance between the electrically driven vehicle 1 and the DC charger 300 is equal to or shorter than the predetermined distance (YES in S210), the ECU 100 performs SOC adjustment control. The ECU 100 performs the processing of the determination in S210 through the use of, for example, information on a current position of the electrically driven vehicle 1 acquired with the aid of a global positioning system (a GPS) and information on a position of the DC charger 300 stored in advance in the navigation system of the electrically driven vehicle 1.

Incidentally, if it is determined in S210 that the distance between the electrically driven vehicle 1 and the DC charger 300 is equal to or shorter than the predetermined distance, the ECU 100 stores a history of the determination until the cancellation process is performed. When the cancellation process is performed, the ECU 100 resets the history. Even in the case where the history of having determined that the distance between the electrically driven vehicle 1 and the DC charger 300 is equal to or shorter than the predetermined distance is stored in S210, the ECU 100 determines that the distance between the electrically driven vehicle 1 and the DC charger 300 is equal to or shorter than the predetermined distance.

On the other hand, if it is determined that the distance from the DC charger 300 is not equal to or shorter than the predetermined distance (NO in S210), the ECU 100 renders the assembled batteries B1 and B2 in the parallel state (S270).

As described above, when the distance between the electrically driven vehicle 1 and the DC charger 300 becomes equal to or shorter than the predetermined distance, the ECU 100 predicts that DC charge of the electrical storage device 10 will be carried out in the near future, and performs SOC adjustment control. Thus, SOC adjustment control can be performed without requiring the user to operate the electrically driven vehicle 1.

In the first modification example, the example in which the SW 80 is provided and it is determined, in accordance with the push operation of the SW 80, whether or not SOC adjustment control should be performed has been described. In the second modification example, the example in which it is determined, in accordance with the distance between the electrically driven vehicle 1 and the DC charger 300, whether or not SOC adjustment control should be performed has been described. In the third modification example, still another method of determining whether or not SOC adjustment control should be performed will be described.

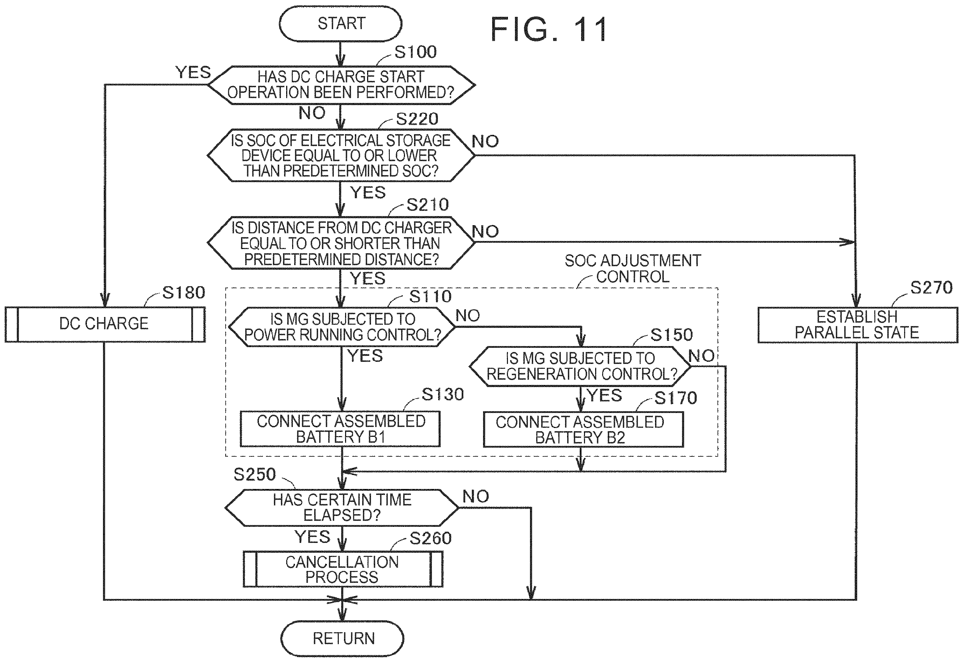

FIG. 11 is a flowchart showing a process that is performed by the ECU 100 of the electrically driven vehicle 1 according to the third modification example. The flowchart shown in FIG. 11 is obtained by adding S220 to the flowchart of FIG. 10. In other words, a step of making a determination on the start of the performance of SOC adjustment control (S220) is added, and SOC adjustment control is performed when both the conditions of S220 and S210 are fulfilled. The other steps are identical to the steps in the flowchart of FIG. 10 respectively, so the description thereof will not be repeated.

If it is determined in S100 that the DC charge start operation has not been performed (NO in S100), the ECU 100 determines whether or not the SOC of the electrical storage device 10 (a total electrical storage amount of the assembled batteries B1 and B2 for a total capacity of the assembled batteries B1 and B2) is equal to or lower than a predetermined SOC (S220). The predetermined SOC is an arbitrarily set value, and is set as, for example, a threshold for determining, in accordance with the distance between the electrically driven vehicle 1 and the DC charger 300, whether or not there is a possibility of DC charge being carried out in the near future.

If it is determined that the SOC of the electrical storage device 10 is equal to or lower than the predetermined SOC (YES in S220), the ECU 100 determines whether or not the distance from the DC charger 300 is equal to or shorter than a predetermined distance (S210). If it is determined that the distance between the electrically driven vehicle 1 and the DC charger 300 is equal to or shorter than the predetermined distance (YES in S210), the ECU 100 performs SOC adjustment control.

If it is determined in S220 that the SOC of the electrical storage device 10 is not equal to or lower than the predetermined SOC (NO in S220), the ECU 100 renders the assembled batteries B1 and B2 in the parallel state (S270).

As described above, when the SOC of the electrical storage device 10 is equal to or lower than the predetermined SOC and the distance between the electrically driven vehicle 1 and the DC charger 300 becomes equal to or shorter than the predetermined distance, the ECU 100 performs SOC adjustment control. In some cases, the user may not intend to carry out DC charge with the aid of the DC charger 300 even when the distance between the electrically driven vehicle 1 and the DC charger 300 becomes equal to or shorter than the predetermined distance.

When the SOC of the electrical storage device 10 is equal to or lower than the predetermined SOC, it is predicted that there is a high possibility of DC charge of the electrical storage device 10 being carried out in the near future. Thus, SOC adjustment control can be restrained from being performed even when the user does not intend to carry out DC charge in the near future, by further determining, in addition to the determination in S210, whether or not the SOC of the electrical storage device 10 is equal to or lower than the predetermined SOC. Thus, the loss caused through the inputting/outputting of electric power to/from the respective assembled batteries as a result of the performance of SOC adjustment control can be restrained from increasing, while increasing the amount of charge that is possible in the initial period.

In each of the first to third modification examples, the example in which the cancellation process is performed after the lapse of the certain time since the start of the performance of SOC adjustment control has been described. However, it may not necessarily be determined whether or not the cancellation process should be performed, according to the method based on whether or not the certain time has elapsed since the start of the performance of SOC adjustment control. In the fourth modification example, another exemplary method of determining whether or not the cancellation process should be performed will be described.

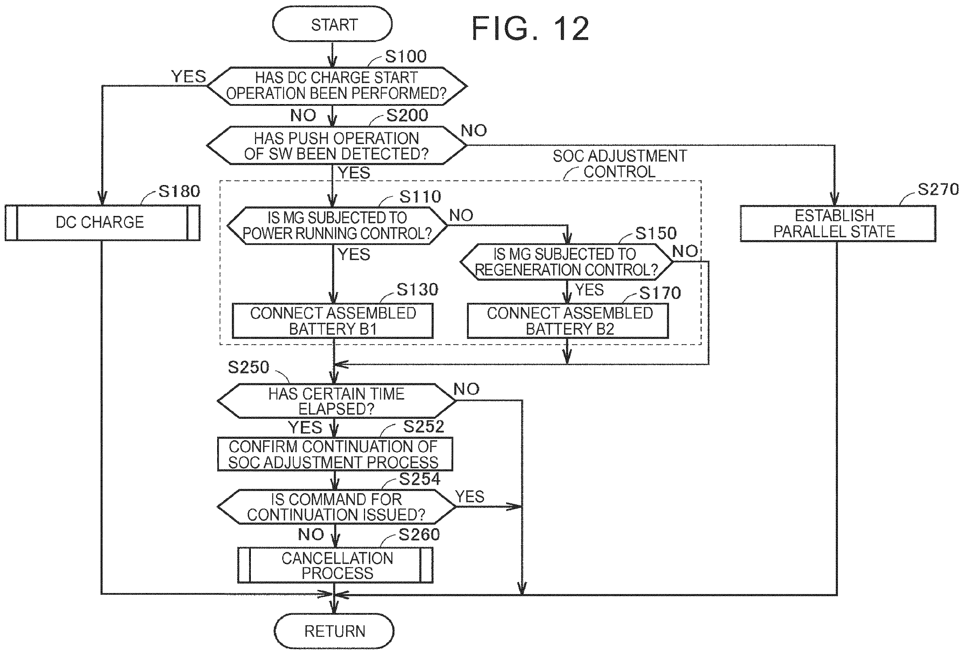

FIG. 12 is a flowchart showing a process that is performed by the ECU 100 of the electrically driven vehicle 1 according to the fourth modification example. The flowchart shown in FIG. 12 is obtained by adding S252 and S254 to the flowchart of FIG. 8. The other steps are identical to the steps in the flowchart of FIG. 8 respectively, so the description thereof will not be repeated.

If it is determined that the certain time has elapsed since the start of the performance of SOC adjustment control (YES in S250), the ECU 100 confirms whether or not the user intends to continue SOC adjustment control (S252). The confirmation of continuation may be carried out by, for example, allowing the user to select whether or not SOC adjustment control can be continued referring to what is displayed on the display unit of the navigation system of the electrically driven vehicle 1, or allowing the user to acoustically respond to an acoustic announcement. Any method can be adopted as long as it can confirm whether or not the user intends to continue SOC adjustment control.

The ECU 100 determines whether or not the user has issued a continuation command (S254). If it is determined that the user has issued a continuation command indicating that the user has chosen to continue SOC adjustment control (YES in S254), the ECU 100 returns the process. On the other hand, if it is determined that the user has not issued a continuation command (NO in S254), the ECU 100 performs the cancellation process (S260).

As described above, it is confirmed whether or not the user intends to continue SOC adjustment control, instead of uniformly performing the cancellation process when it is determined that the certain time has elapsed since the start of the performance of SOC adjustment control. Thus, the user's intention can be reflected in determining whether or not the cancellation process should be performed.

In each of the first to third modification examples, the example in which the cancellation process is performed after the lapse of the certain time since the start of the performance of SOC adjustment control has been described. In the fourth modification example, the example in which it is confirmed whether or not the user intends to continue SOC adjustment control after the lapse of the certain time since the start of the performance thereof has been described. In the fifth modification example, still another method of determining whether or not the cancellation process should be performed will be described.

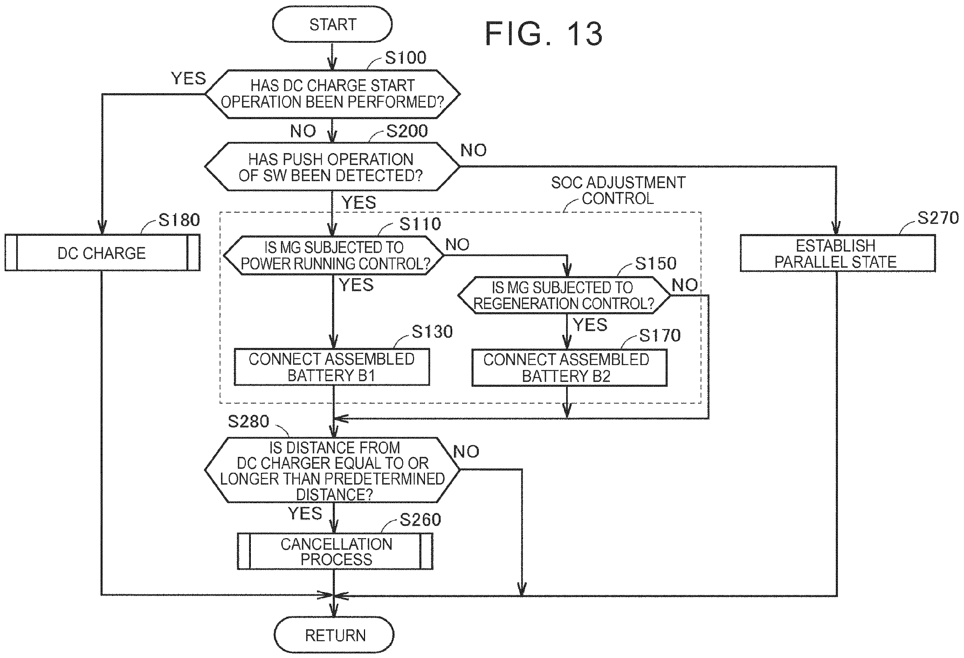

FIG. 13 is a flowchart showing a process that is performed by the ECU 100 of the electrically driven vehicle 1 according to the fifth modification example. The flowchart shown in FIG. 13 is obtained by replacing S250 with S280 in the flowchart of FIG. 8. The other steps are identical to the other steps in the flowchart of FIG. 8 respectively, so the description thereof will not be repeated.

In performing SOC adjustment control, the ECU 100 determines whether or not the distance between the electrically driven vehicle 1 and the DC charger 300 is equal to or longer than the predetermined distance (S280). If it is determined that the distance between the electrically driven vehicle 1 and the DC charger 300 is equal to or longer than the predetermined distance (YES in S280), the ECU 100 performs the cancellation process (S260).

On the other hand, if it is determined that the distance between the electrically driven vehicle 1 and the DC charger 300 is not equal to or longer than the predetermined distance (NO in S280), the ECU 100 returns the process.

As described above, when the distance between the electrically driven vehicle 1 and the DC charger 300 becomes equal to or longer than the predetermined distance, the ECU 100 estimates that the user does not intend to carry out DC charge, and performs the cancellation process. Thus, the cancellation process can be performed without requiring the user to operate the electrically driven vehicle 1.

In the first embodiment, SOC adjustment control is performed through the control of the switching relays R1 and R2 by the ECU 100. Besides, in each of the first to fifth modification examples, SOC adjustment control and the cancellation process are performed through the control of the switching relays R1 and R2 by the ECU 100. However, the method of performing SOC adjustment control and the cancellation process is not limited to the control of the switching relays R1 and R2. An SOC adjustment circuit for adjusting the SOC's of the assembled batteries B1 and B2 may be provided therebetween. In the second embodiment, an example in which a step-up/step-down converter is provided as the SOC adjustment circuit between the assembled battery B1 and the assembled battery B2 will be described.

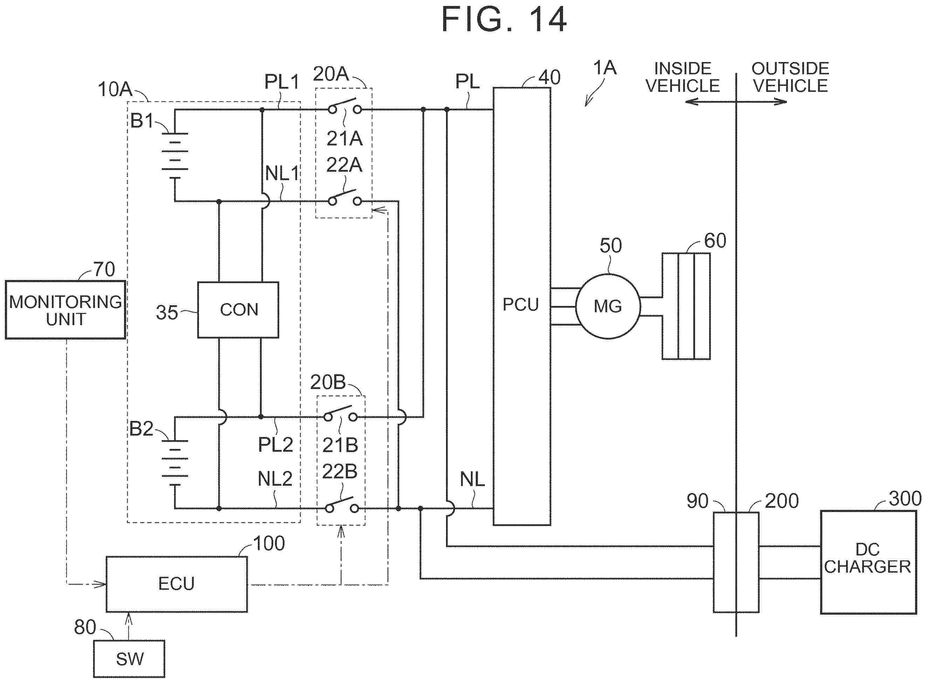

FIG. 14 is an overall configuration view of a charge system including the DC charger 300 and an electrically driven vehicle 1A that is mounted with a charge control device according to the second embodiment.

The electrically driven vehicle 1A is equipped with an electrical storage device 10A, the PCU 40, the motor-generator 50, the driving wheel 60, the vehicle inlet 90, the ECU 100, main relay devices 20A and 20B, and the monitoring unit 70. The electrically driven vehicle 1A is configured in the same manner as the electrically driven vehicle 1 according to the first embodiment except in the electrical storage device 10A and the main relay devices 20A and 20B, so the description thereof will not be repeated.

The electrical storage device 10A is equipped with the assembled batteries B1 and B2, and a step-up/step-down converter 35 between the assembled batteries B1 and B2. The step-up/step-down converter 35 carries out voltage conversion between a positive electrode line PL1 and a positive electrode line PL2 and between a negative electrode line NL1 and a negative electrode line NL2. In concrete terms, the voltage of the electric power supplied from the assembled battery B1 is converted so that this electric power is then supplied to the assembled battery B2, and the voltage of the electric power supplied from the assembled battery B2 is converted so that this electric power is then supplied to the assembled battery B1.

By exchanging electric power between the assembled battery B1 and the assembled battery B2 through the use of the step-up/step-down converter 35, SOC adjustment control and the cancellation process can be performed.

Incidentally, although not shown in the drawing, conversion relays for using the step-up/step-down converter 35 may be provided between the step-up/step-down converter 35 and the positive electrode lines PL1 and PL2 and between the step-up/step-down converter 35 and the negative electrode lines NL1 and NL2, respectively. According to the configuration in this case, the step-up/step-down converter 35 is used by switching the on/off states of the conversion relays in accordance with the control performed by the ECU 100.

The main relay device 20A is provided between the electrical storage device 10A and the drive unit. The main relay device 20A includes a main relay 21A and a main relay 22A. The main relay 21A and the main relay 22A are provided on the positive electrode line PL1 and the negative electrode line NL1 respectively.

The main relay device 20B is provided between the electrical storage device 10A and the drive unit. The main relay device 20B includes a main relay 21B and a main relay 22B. The main relay 21B and the main relay 22B are provided on the positive electrode line PL2 and the negative electrode line NL2 respectively.

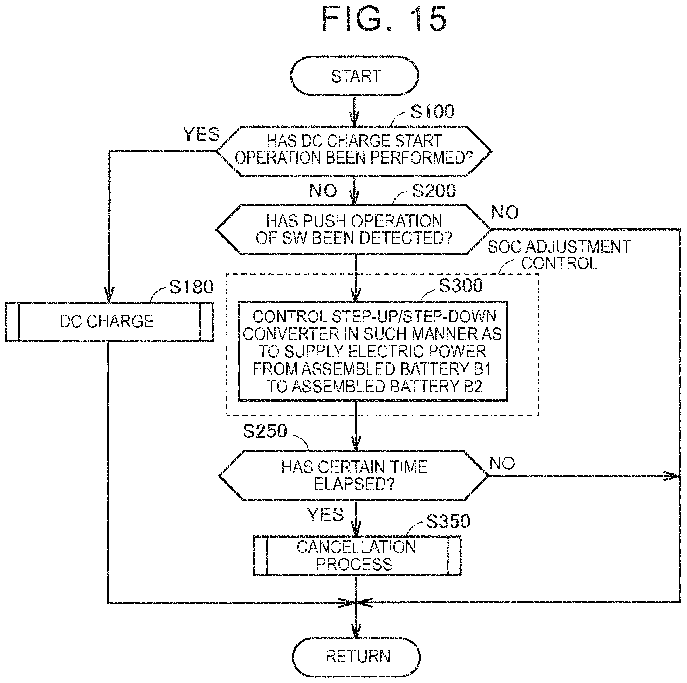

FIG. 15 is a flowchart showing a process that is performed by the ECU 100 of the electrically driven vehicle 1A according to the second embodiment. Incidentally, S100, S180, S200, and S250 in FIG. 15 are identical to S100, S180, S200, and S250 in FIG. 8 respectively, so the description thereof will not be repeated.

If it is determined in S200 that the push operation of the SW 80 has been detected (YES in S200), the ECU 100 performs SOC adjustment control (S300). In concrete terms, the ECU 100 controls the step-up/step-down converter 35 in such a manner as to supply electric power from the assembled battery B1 to the assembled battery B2 as SOC adjustment control.

Thus, the SOC1 of the assembled battery B1 becomes low, and the SOC2 of the assembled battery B2 becomes high, so an adjustment is made such that the difference between the SOC1 of the assembled battery B1 and the SOC2 of the assembled battery B2 becomes large. Incidentally, SOC adjustment control is not limited to making the SOC1 of the assembled battery B1 low and making the SOC2 of the assembled battery B2 high. In SOC adjustment control, the SOC1 of the assembled battery B1 may be made high, and the SOC2 of the assembled battery B2 may be made low.

The ECU 100 determines whether or not a certain time has elapsed since the start of the performance of SOC adjustment control (S250). If it is determined that the certain time has elapsed (YES in S250), the ECU 100 performs the cancellation process that will be described later (S350).

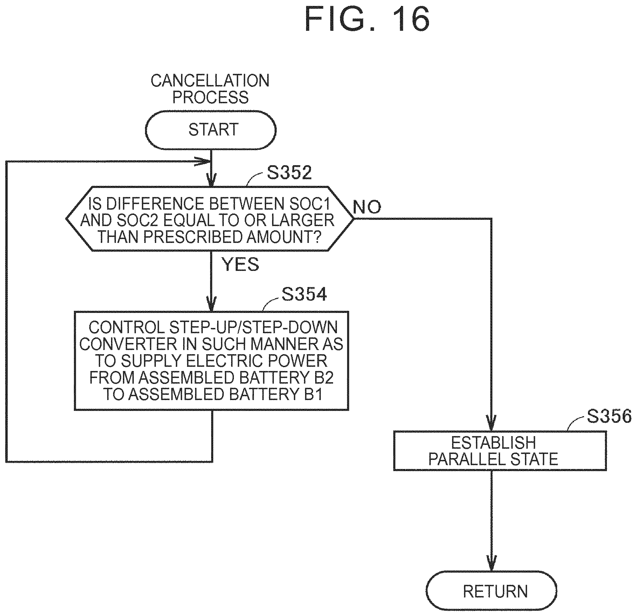

FIG. 16 is a flowchart showing a process that is performed by the ECU 100 in the cancellation process. The process of this flowchart is performed when it is determined that the certain time has elapsed since the performance of SOC adjustment control.

The ECU 100 determines whether or not there is a difference equal to or larger than a prescribed amount between the SOC1 of the assembled battery B1 and the SOC2 of the assembled battery B2 (S352). If it is determined that there is a difference equal to or larger than the prescribed amount between the SOC1 of the assembled battery B1 and the SOC2 of the assembled battery B2 (YES in S352), the ECU 100 controls the step-up/step-down converter 35 in such a manner as to supply electric power from the assembled battery B2 to the assembled battery B1. Thus, the SOC1 of the assembled battery B1 becomes high, and the SOC2 of the assembled battery B2 becomes low. That is, the difference between the SOC1 of the assembled battery B1 and the SOC2 of the assembled battery B2 becomes small. Then, the ECU 100 returns the process to S352.

If it is determined that there is no difference equal to or larger than the prescribed amount between the SOC1 of the assembled battery B1 and the SOC2 of the assembled battery B2 (NO in S352), the ECU 100 renders the assembled battery B1 and the assembled battery B2 in the parallel state (S356). In concrete terms, the ECU 100 turns on the switching relay R1, turns on the switching relay R2, and electrically connects the assembled battery B1 and the assembled battery B2 to the electric loads of the electrically driven vehicle 1A.

As described above, the ECU 100 performs the process of making the difference between the SOC1 of the assembled battery B1 and the SOC2 of the assembled battery B2 small (the cancellation process). Then, when the difference between the SOC1 of the assembled battery B1 and the SOC2 of the assembled battery B2 becomes smaller than the prescribed amount, the ECU 100 renders the assembled batteries B1 and B2 in the parallel state. Due to the performance of the cancellation process in this manner, the assembled batteries B1 and B2 can be rendered in the parallel state without influencing the energization components.

In each of the first to fifth modification examples, the cancellation process is performed through the control of the switching relays R1 and R2 by the ECU 100. Besides, in the second embodiment, the cancellation process is performed through the control of the step-up/step-down converter 35 by the ECU 100. However, the cancellation process may not necessarily be performed according to these methods. In the third embodiment, an example in which resistor elements are used will be described.

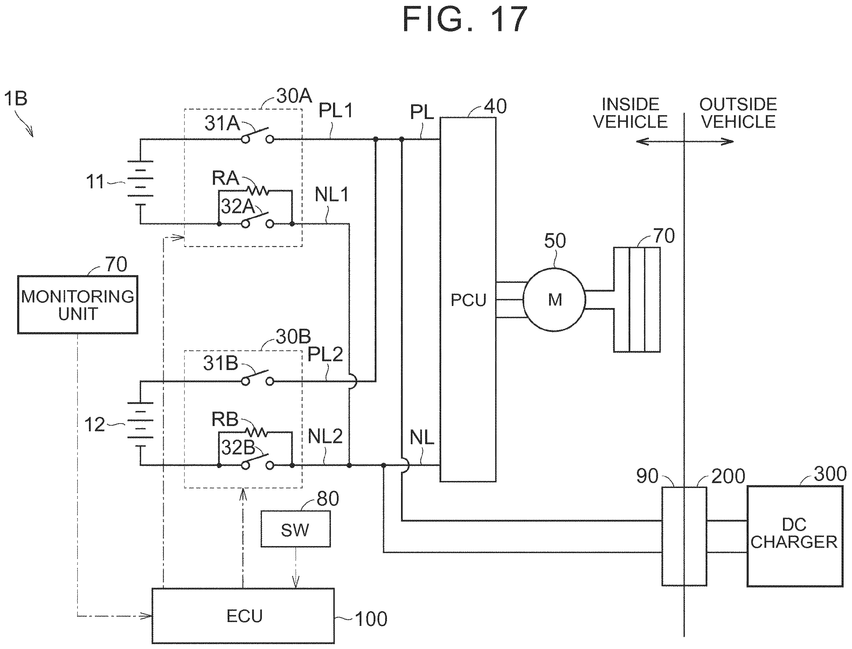

FIG. 17 is an overall configuration view of a charge system including the DC charger 300 and an electrically driven vehicle 1B that is mounted with a charge control device according to the third embodiment.

The electrically driven vehicle 1B is equipped with the electrical storage device 10, the PCU 40, the motor-generator 50, the driving wheel 60, the vehicle inlet 90, the ECU 100, main relay devices 30A and 30B, and the monitoring unit 70. The electrically driven vehicle 1B is configured in the same manner as the electrically driven vehicle 1 according to the first embodiment except in the main relay devices 30A and 30B, so the description thereof will not be repeated.

The main relay device 30A is provided between the assembled battery B1 and the drive unit. The main relay device 30A includes a main relay 31A, a main relay 32A, and a resistor element RA. The main relay 31A is provided on the positive electrode line PL1. The main relay 32A is provided on the negative electrode line NL1. Then, the resistor element RA is connected in parallel to the main relay 32A. Incidentally, the resistor element RA may be connected in parallel to the main relay 31A.

The main relay device 30B is provided between the assembled battery B2 and the drive unit. The main relay device 30B includes a main relay 31B, a main relay 32B, and a resistor element RB. The main relay 31B is provided on the positive electrode line PL2. The main relay 32B is provided on the negative electrode line NL2. Then, the resistor element RB is connected in parallel to the main relay 32B. Incidentally, the resistor element RB may be connected in parallel to the main relay 31B.

When the assembled batteries B1 and B2 are rendered in the parallel state with a large difference between the SOC1 of the assembled battery B1 and the SOC2 of the assembled battery B2, an excessive current may instantaneously flow from the assembled battery B2 (with the higher SOC) to the assembled battery B1 (with the lower SOC). When an excessive current flows through the connection path of the assembled battery B1 and the assembled battery B2, there is an apprehension that the energization components may be subjected to influences such as malfunction and the like.

Thus, when there is a difference equal to or larger than a prescribed amount between the SOC1 of the assembled battery B1 and the SOC2 of the assembled battery B2, an excessive current is restrained from flowing instantaneously, by causing the current flowing at the time when the assembled battery B1 and the assembled battery B2 are rendered in the parallel state to flow through the resistor elements RA and RB.

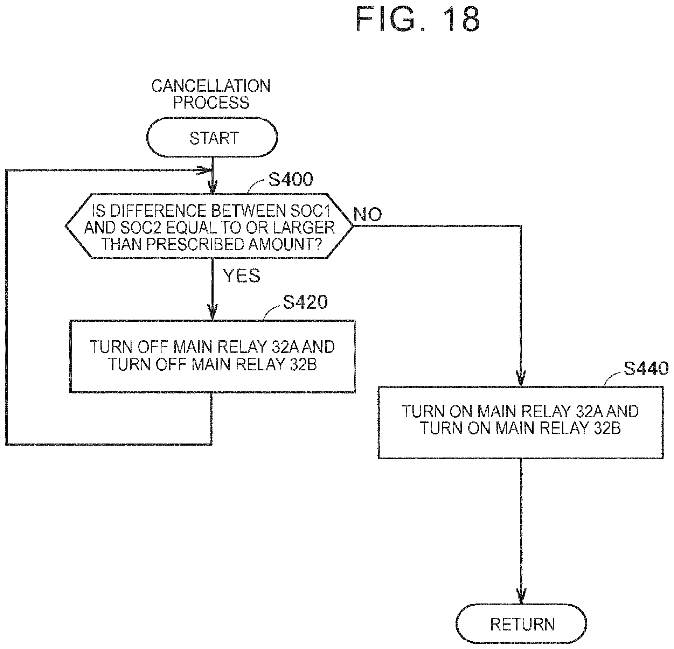

FIG. 18 is a flowchart showing a process that is performed by the ECU 100 in the cancellation process. The process of this flowchart is performed when it is determined that a certain time has elapsed since the performance of SOC adjustment control.

The ECU 100 determines whether or not there is a difference equal to or larger than a prescribed amount between the SOC1 of the assembled battery B1 and the SOC2 of the assembled battery B2 (S400). If it is determined that there is a difference equal to or larger than the prescribed amount between the SOC1 of the assembled battery B1 and the SOC2 of the assembled battery B2 (YES in S400), the ECU 100 turns off the main relay 32A and the main relay 32B (S420). Because the main relay 32A and the main relay 32B are off, the current flowing at the time when the assembled battery B1 and the assembled battery B2 are rendered in the parallel state with a difference equal to or larger than the prescribed amount between the SOC1 of the assembled battery B1 and the SOC2 of the assembled battery B2 flows through the resistor elements RA and RB. Thus, the excessive current is restrained from instantaneously flowing through the connection path of the assembled battery B1 and the assembled battery B2, while making the difference between the SOC1 of the assembled battery B1 and the SOC2 of the assembled battery B2 small (the cancellation process). It should be noted, however, that the inflow of the excessive current is suppressed through the use of the resistor elements RA and RB whose resistance values are appropriate. Then, the ECU 100 returns the process to S400.

If it is determined that there is no difference equal to or larger than the prescribed amount between the SOC1 of the assembled battery B1 and the SOC2 of the assembled battery B2 (NO in S400), the ECU 100 turns on the main relay 32A and the main relay 32B (S440). Thus, the current mainly flows through the main relays 32A and 32B instead of flowing through the resistor elements RA and RB. Therefore, the loss of electric power caused through the consumption of the current in the resistor elements RA and RB is reduced.

As described above, when the difference between the SOC1 of the assembled battery B1 and the SOC2 of the assembled battery B2 is equal to or larger than the prescribed amount in rending the assembled battery B1 and the assembled battery B2 in the parallel state, the ECU 100 performs control to prevent an excessive current from flowing, through the use of the resistor elements RA and RB. Thus, an excessive current is restrained from instantaneously flowing through the connection path of the assembled battery B1 and the assembled battery B2, while making the difference between the SOC1 of the assembled battery B1 and the SOC2 of the assembled battery B2 small (the cancellation process).

Then, when the difference between the SOC1 of the assembled battery B1 and the SOC2 of the assembled battery B2 becomes smaller than the prescribed amount, the ECU 100 can restrain the loss of electric power from being caused through the consumption of the current in the resistor elements RA and RB, by controlling the main relay devices 30A and 30B such that the current flows without using the resistor elements RA and RB.

**Claims**

1. An electrically driven vehicle (1; 1A; 1B) configured to receive direct current electric power supplied from an external direct current electric power supply, the electrically driven vehicle (1; 1A; 1B) comprising:

   an electrical storage device (10; 10A) including a plurality of electrical storage bodies (B1, B2) and configured to charge by the direct current electric power supply, the plurality of the electrical storage bodies (B1, B2) including a first electrical storage body (B1) and a second electrical storage body (B2); and
   an electronic control unit (100) configured to limit charge electric power supplied by the direct current electric power supply as an electrical storage amount of the electrical storage device (10; 10A) increases,
   wherein the electronic control unit (100) is configured to, when charging of the electrical storage device (10; 10A) by the direct current electric power supply is carried out, charge the first electrical storage body (B1) in priority to the second electrical storage body (B2),
   **characterised in that** the electronic control unit (100) is configured to, when charging of the electrical storage device (10; 10A) by the direct current electric power supply is not carried out, perform adjustment control, the adjustment control comprising charging of the second electrical storage body (B2) such that the electrical storage amount of the first electrical storage body (B1) is made smaller than the electrical storage amount of the second electrical storage body (B2) by a predetermined amount or more.

2. The electrically driven vehicle (1; 1A; 1B) according to claim 1, wherein the electronic control unit (100) is configured to perform the adjustment control when a first condition and a second condition are both satisfied,
   the first condition is a condition that charge by the direct current electric power supply is not carried out, and
   the second condition is a condition that charge by the direct current electric power supply is predicted to be carried out.

3. The electrically driven vehicle (1; 1A; 1B) according to claim 2, wherein
   the electronic control unit (100) is configured to predict that charge by the direct current electric power supply is carried out when a user of the electrically driven vehicle (1; 1A; 1B) performs an operation of issuing a command to perform the adjustment control.

4. The electrically driven vehicle (1) according to any one of claims 1 to 3, wherein the electrical storage device (10) includes a switching relay (R1, R2) that is configured to switch a connection relationship between the plurality of the electrical storage bodies (B1, B2) and the direct current electric power supply when the electrically driven vehicle (1) and the direct current electric power supply are connected to each other,
   the adjustment control comprises first control and second control, the first control being control for controlling the switching relay (R1, R2) such that the second electrical storage body (B2) is charged with regenerative electric power through regeneration control when a rotating electrical machine (50) connected to a drive shaft of the electrically driven vehicle (1) is subjected to the regeneration control, and the second control being control for controlling the switching relay (R1, R2) such that electric power used in power running control is supplied from the first electrical storage body (B1) when the rotating electrical machine (50) is subjected to the power running control.

**5.** The electrically driven vehicle (1A) according to any one of claims 1 to 3, further comprising:

a voltage conversion device (35) provided between the plurality of the electrical storage bodies (B1, B2), wherein
the adjustment control comprises supplying electric power from the first electrical storage body (B1) to the second electrical storage body (B2) via the voltage conversion device (35) to make the state of charge of the first electrical storage body (B1) smaller than the state of charge of the second electrical storage body (B2) by the predetermined amount or more.

**6.** A method of controlling an electrically driven vehicle (1; 1A; 1B) that receives direct current electric power supplied from an external direct current electric power supply, the electrically driven vehicle (1; 1A; 1B) including an electrical storage device (10; 10A) and an electronic control unit (100),

the electrical storage device (10; 10A) including a plurality of electrical storage bodies (B1, B2) and being configured to charge by the direct current electric power supply, the plurality of the electrical storage bodies (B1, B2) including a first electrical storage body (B1) and a second electrical storage body (B2), and
the electronic control unit (100) being configured to limit charge electric power supplied by the direct current electric power supply as an electrical storage amount of the electrical storage device (10; 10A) increases,

the method comprising:

when charging of the electrical storage device (10; 10A) by the direct current electric power supply is carried out, charging, by the electronics control unit (100), the first electrical storage body (B1) in priority to the second electrical storage body (B2),
**characterised by**, when charging of the electrical storage device (10; 10A) by the direct current electric power supply is not carried out, performing, by the electronic control unit (100), adjustment control, the adjustment control comprising charging of the second electrical storage body (B2) such that the electrical storage amount of the first electrical storage body (B1) is made smaller than the electrical storage amount of the second electrical storage body (B2) by a predetermined amount or more.

**Patentansprüche**

**1.** Elektrisch angetriebenes Fahrzeug (1; 1A; 1B), das konfiguriert ist, um elektrische Gleichstrom-Leistung von einer externen elektrischen Gleichstrom-Leistungszufuhr aufzunehmen, wobei das elektrisch angetriebene Fahrzeug (1; 1A; 1B) umfasst:

eine elektrische Speichervorrichtung (10; 10A), die eine Mehrzahl von elektrischen Speicherkörpern (B1, B2) beinhaltet und konfiguriert ist, um durch die elektrische Gleichstrom-Leistungszufuhr geladen zu werden, wobei die Mehrzahl der elektrischen Speicherkörper (B1, B2) einen ersten elektrischen Speicherkörper (B1) und einen zweiten elektrischen Speicherkörper (B2) beinhaltet; und
eine elektronische Steuereinheit (100), die konfiguriert ist, um die von der elektrischen Gleichstrom-Leistungszufuhr zugeführte elektrische Ladeleistung zu begrenzen, wenn eine elektrische Speichermenge der elektrischen Speichervorrichtung (10; 10A) zunimmt,
wobei die elektronische Steuereinheit (100) konfiguriert ist, um, wenn ein Laden der elektrischen Speichervorrichtung (10; 10A) durch die elektrische Gleichstrom-Leistungszufuhr durchgeführt wird, den ersten elektrischen Speicherkörper (B1) vorrangig vor dem zweiten elektrischen Speicherkörper (B2) zu laden,
**dadurch gekennzeichnet, dass** die elektronische Steuereinheit (100) konfiguriert ist, um, wenn das Laden der elektrischen Speichervorrichtung (10; 10A) durch die elektrische Gleichstrom-Leistungszufuhr nicht durchgeführt wird, eine Einstellsteuerung durchzuführen, wobei die Einstellsteuerung das Laden des zweiten elektrischen Speicherkörpers (B2) derart umfasst, dass die elektrische Speichermenge des ersten elektrischen Speicherkörpers (B1) um eine vorbestimmte Menge oder mehr kleiner gemacht wird als die elektrische Speichermenge des zweiten elektrischen Speicherkörpers (B2).

**2.** Elektrisch angetriebenes Fahrzeug (1; 1A; 1B) nach Anspruch 1, wobei

die elektronische Steuereinheit (100) konfiguriert ist, die Einstellsteuerung durchzuführen, wenn eine erste Bedingung und eine zweite Bedingung beide erfüllt sind,
wobei die erste Bedingung eine Bedingung ist, dass das Laden durch die elektrische Gleichstrom-Leistungszufuhr nicht durchgeführt wird, und

wobei die zweite Bedingung eine Bedingung ist, dass vorausgesagt wird, dass das Laden durch die elektrische Gleichstrom-Leistungszufuhr durchgeführt wird.

3. Elektrisch angetriebenes Fahrzeug (1; 1A; 1B) nach Anspruch 2, wobei
die elektronische Steuereinheit (100) konfiguriert ist, um vorherzusagen, dass das Laden durch die elektrische Gleichstrom-Leistungszufuhr durchgeführt wird, wenn ein Benutzer des elektrisch angetriebenen Fahrzeugs (1; 1A; 1B) einen Vorgang des Ausgebens eines Befehls zum Durchführen der Einstellsteuerung durchführt.

4. Elektrisch angetriebenes Fahrzeug (1) nach einem der Ansprüche 1 bis 3, wobei

die elektrische Speichervorrichtung (10) ein Schaltrelais (R1, R2) beinhaltet, das konfiguriert ist, um eine Verbindungsbeziehung zwischen der Mehrzahl der elektrischen Speicherkörper (B1, B2) und der elektrischen Gleichstrom-Leistungszufuhr zu schalten, wenn das elektrisch angetriebene Fahrzeug (1) und die elektrische Gleichstrom-Leistungszufuhr miteinander verbunden sind,
die Einstellsteuerung eine erste Steuerung und eine zweite Steuerung umfasst, wobei die erste Steuerung eine Steuerung zum Steuern des Schaltrelais (R1, R2) ist, sodass der zweite elektrische Speicherkörper (B2) mit regenerativer elektrischer Leistung durch Regenerationssteuerung geladen wird, wenn eine rotierende elektrische Maschine (50), die mit einer Antriebswelle des elektrisch angetriebenen Fahrzeugs (1) verbunden ist, der Regenerationssteuerung unterworfen wird, und wobei die zweite Steuerung eine Steuerung zum Steuern des Schaltrelais (R1, R2), sodass elektrische Leistung, die in der Leistungsbetriebssteuerung verwendet wird, von dem ersten elektrischen Speicherkörper (B1) zugeführt wird, wenn die rotierende elektrische Maschine (50) der Leistungsbetriebssteuerung unterworfen ist.

5. Elektrisch angetriebenes Fahrzeug (1A) nach einem der Ansprüche 1 bis 3, ferner umfassend:

eine Spannungsumwandlungsvorrichtung (35), die zwischen der Mehrzahl der elektrischen Speicherkörper (B1, B2) bereitgestellt ist, wobei die Einstellsteuerung das Zuführen von elektrischer Leistung von dem ersten elektrischen Speicherkörper (B1) zu dem zweiten elektrischen Speicherkörper (B2) über die Spannungsumwandlungsvorrichtung (35) umfasst, um den Ladezustand des ersten elektrischen Speicherkörpers (B1) um die vorbestimmte Menge oder mehr kleiner zu machen als den Ladezustand des zweiten elektrischen Speicherkörpers (B2).

6. Verfahren zum Steuern eines elektrisch angetrieben Fahrzeugs (1; 1A; 1B), das elektrische Gleichstrom-Leistung aufnimmt, die von einer externen elektrischen Gleichstrom-Leistungszufuhr zugeführt wird, wobei das elektrisch angetriebene Fahrzeug (1; 1A; 1B) eine elektrische Speichervorrichtung (10; 10A) und eine elektrische Steuereinheit (100) beinhaltet,

wobei die elektrische Speichervorrichtung (10; 10A) eine Mehrzahl von elektrischen Speicherkörpern (B1, B2) beinhaltet und konfiguriert ist, um durch die elektrische Gleichstrom-Leistungszufuhr geladen zu werden, wobei die Mehrzahl der elektrischen Speicherkörper (B1, B2) einen ersten elektrischen Speicherkörper (B1) und einen zweiten elektrischen Speicherkörper (B2) beinhaltet; und
wobei die elektronische Steuereinheit (100) konfiguriert ist, um die von der elektrischen Gleichstrom-Leistungszufuhr zugeführte elektrische Ladeleistung zu begrenzen, wenn eine elektrische Speichermenge der elektrischen Speichervorrichtung (10; 10A) zunimmt,
wobei das Verfahren umfasst:

wenn ein Laden der elektrischen Speichervorrichtung (10; 10A) durch die elektrische Gleichstrom-Leistungszufuhr durchgeführt wird, Laden durch die elektrische Steuereinheit (100) des ersten elektrischen Speicherkörpers (B1) vorrangig vor dem zweiten elektrischen Speicherkörper (B2),
**gekennzeichnet durch** das Durchführen durch die elektronische Steuereinheit (100), wenn das Laden der elektrischen Speichervorrichtung (10; 10A) durch die elektrische Gleichstrom-Leistungszufuhr nicht durchgeführt wird, einer Einstellsteuerung, wobei die Einstellsteuerung ein Laden des zweiten elektrischen Speicherkörpers (B2) derart umfasst, dass die elektrische Speichermenge des ersten elektrischen Speicherkörpers (B1) um eine vorbestimmte Menge oder mehr kleiner gemacht wird als die elektrische Speichermenge des zweiten elektrischen Speicherkörpers (B2).

## Revendications

1. Véhicule à entraînement électrique (1 ; 1A ; 1B) configuré pour recevoir une alimentation électrique en courant continu fournie par une alimentation électrique en courant continu externe, le véhicule à entraînement électrique (1 ; 1A ; 1B) comprenant :

   un dispositif de stockage électrique (10 ; 10A) comprenant une pluralité de corps de stockage électrique (B1, B2) et configuré pour se charger par l'alimentation électrique en courant continu, la pluralité de corps de stockage électrique (B1, B2) comprenant un premier corps de stockage électrique (B1) et un deuxième corps de stockage électrique (B2) ; et
   une unité de commande électronique (100) configurée pour limiter l'énergie électrique de charge fournie par l'alimentation électrique en courant continu lorsque la quantité de stockage électrique du dispositif de stockage électrique (10 ; 10A) augmente,
   dans lequel l'unité de commande électronique (100) est configurée pour, lors de la charge du dispositif de stockage électrique (10 ; 10A) par l'alimentation électrique en courant continu, charger le premier corps de stockage électrique (B1) en priorité par rapport au deuxième corps de stockage électrique (B2),
   **caractérisé en ce que** l'unité de commande électronique (100) est configurée pour, lorsque la charge du dispositif de stockage électrique (10 ; 10A) par l'alimentation électrique en courant continu n'est pas effectuée, effectuer une commande de réglage, la commande de réglage comprenant la charge du deuxième corps de stockage électrique (B2) de telle sorte que la quantité de stockage électrique du premier corps de stockage électrique (B1) soit rendue inférieure à la quantité de stockage électrique du deuxième corps de stockage électrique (B2) d'une quantité prédéterminée ou plus.

2. Véhicule à entraînement électrique (1; 1A; 1B) selon la revendication 1, dans lequel

   l'unité de commande électronique (100) est configurée pour effectuer la commande de réglage lorsqu'une première condition et une deuxième condition sont toutes deux satisfaites, la première condition est une condition selon laquelle la charge par l'alimentation électrique en courant continu n'est pas effectuée, et la deuxième condition est une condition selon laquelle la charge par l'alimentation électrique en courant continu est prévue pour être effectuée.

3. Véhicule à entraînement électrique (1 ; 1A ; 1B) selon la revendication 2, dans lequel
   l'unité de commande électronique (100) est configurée pour prédire que la charge par l'alimentation électrique en courant continu est effectuée lorsqu'un utilisateur du véhicule à entraînement électrique (1; 1A; 1B) effectue une opération d'émission d'une commande pour effectuer la commande de réglage.

4. Véhicule à entraînement électrique (1) selon l'une quelconque des revendications 1 à 3, dans lequel

   le dispositif de stockage électrique (10) comprend un relais de commutation (R1, R2) qui est configuré pour commuter une relation de connexion entre la pluralité de corps de stockage électrique (B1, B2) et l'alimentation électrique en courant continu lorsque le véhicule à entraînement électrique (1) et l'alimentation électrique en courant continu sont connectés l'un à l'autre, la commande de réglage comprend une première commande et une deuxième commande, la première commande étant une commande pour commander le relais de commutation (R1, R2) de telle sorte que le deuxième corps de stockage électrique (B2) soit chargé en énergie électrique régénératrice par commande de régénération lorsqu'une machine électrique tournante (50) connectée à un arbre d'entraînement du véhicule à entraînement électrique (1) est soumise à la commande de régénération, et la deuxième commande étant une commande pour commander le relais de commutation (R1, R2) de telle sorte que l'énergie électrique utilisée dans la commande de puissance soit fournie à partir du premier corps de stockage électrique (B1) lorsque la machine électrique tournante (50) est soumise à la commande de puissance.

5. Véhicule à entraînement électrique (1A) selon l'une quelconque des revendications 1 à 3, comprenant en outre :

   un dispositif de conversion de tension (35) prévu entre la pluralité des corps de stockage électrique (B1, B2), dans lequel
   la commande de réglage comprend l'alimentation d'énergie électrique à partir du premier corps de stockage électrique (B1) au deuxième corps de stockage électrique (B2) via le dispositif de conversion de tension (35) pour rendre l'état de charge du premier corps de stockage électrique (B1) inférieur à l'état de charge du deuxième corps de stockage électrique (B2) de la quantité prédéterminée ou plus.

6. Procédé de commande d'un véhicule à entraînement électrique (1 ; 1A ; 1B) qui reçoit de l'énergie électrique en courant continu fournie par une alimentation électrique en courant continu externe, le véhicule à entraînement électrique (1 ; 1A ; 1B) comprenant un dispositif de stockage électrique (10 ; 10A) et une unité de commande électronique (100),

le dispositif de stockage électrique (10 ; 10A) comprenant une pluralité de corps de stockage électrique (B1, B2) et étant configuré pour charger par l'alimentation électrique en courant continu, la pluralité des corps de stockage électrique (B1, B2) comprenant un premier corps de stockage électrique (B1) et un deuxième corps de stockage électrique (B2), et

l'unité de commande électronique (100) étant configurée pour limiter l'énergie électrique de charge fournie par l'alimentation électrique en courant continu tant qu'une quantité de stockage électrique du dispositif de stockage électrique (10 ; 10A) augmente,

le procédé comprenant :

lorsque la charge du dispositif de stockage électrique (10 ; 10A) par l'alimentation électrique en courant continu est effectué, la charge, par l'unité de commande électronique (100), du premier corps de stockage électrique (B1) en priorité par rapport au deuxième corps de stockage électrique (B2),

**caractérisé par**, lors de la charge du dispositif de stockage électrique (10 ; 10A) par l'alimentation électrique en courant continu n'est pas effectuée, l'exécution, par l'unité de commande électronique (100), d'une commande de réglage, la commande de réglage comprenant la charge du deuxième corps de stockage électrique (B2) de telle sorte que la quantité de stockage électrique du premier corps de stockage électrique (B1) soit rendue inférieure à la quantité de stockage électrique du deuxième corps de stockage électrique (B2) d'une quantité prédéterminée ou plus.

# FIG. 1

EP 3 536 543 B1

# FIG. 2

DC CHARGE IN CASE WHERE SOC ADJUSTMENT CONTROL IS NOT PERFORMED

DC CHARGER

IB1  IB2

B1  B2

80%  80%

SOC [%]

80

B1 AND B2 REMAINING SAME

T

CHARGE CURRENT [A]

BOTH CURRENTS IB1 AND IB2 LIMITED

IB1 AND IB2 REMAINING SAME

T

CHARGE AMOUNT [kWh]

T

INITIAL PERIOD

# FIG. 3

DC CHARGE IN CASE WHERE SOC ADJUSTMENT CONTROL IS PERFORMED

# FIG. 4

```
                    ┌─────────┐
                    │  START  │
                    └─────────┘
                         │
                         ▼  ┌S100
              ╱ HAS DC CHARGE START ╲
   YES       ╱  OPERATION BEEN       ╲
   ◄─────────  PERFORMED?
             ╲                       ╱      SOC ADJUSTMENT
              ╲─────────────────────╱           CONTROL
   │                 NO  │
   │ ┌S180              ▼  ┌S110                  ┌S150
   ▼ ┌───────────┐  ╱ IS MG SUBJECTED TO ╲  NO  ╱ IS MG SUBJECTED TO ╲  NO
   │ │ DC CHARGE │  ╲ POWER RUNNING CONTROL? ───► ╲ REGENERATION CONTROL? ╲──┐
   │ └───────────┘   ╲                 ╱           ╲               ╱        │
   │                    YES  │                        YES │  ┌S170          │
   │                         ▼  ┌S130                      ▼  ┌───────────┐  │
   │                  ┌──────────────┐            ┌──────────────────┐     │
   │                  │CONNECT ASSEMBLED│          │CONNECT ASSEMBLED │     │
   │                  │  BATTERY B1     │          │  BATTERY B2      │     │
   │                  └──────────────┘            └──────────────────┘     │
   │                         │                             │               │
   └─────────────────────────┼─────────────────────────────               │
                             ▼                                             │
                        ┌─────────┐                                        │
                        │ RETURN  │◄───────────────────────────────────────┘
                        └─────────┘
```

FIG. 5

```
                    ┌──────────────┐
                    │    START     │
                    └──────┬───────┘
                           │           ╱─ S182
                           ▼
         ╱──────────────────────────────────╲
        ╱   IS DIFFERENCE BETWEEN SOC1        ╲
       ╱   OF ASSEMBLED BATTERY B1 AND         ╲        NO
      ⟨    SOC2 OF ASSEMBLED BATTERY B2         ⟩──────────────┐
       ╲   EQUAL TO OR LARGER THAN             ╱               │
        ╲   PREDETERMINED AMOUNT?             ╱                │
         ╲──────────────────────────────────╱                 │
                           │ YES                               │
                           ▼         ╱─ S184                   ▼         ╱─ S188
                 ┌──────────────────┐              ┌──────────────────┐
                 │ CONNECT ASSEMBLED│              │    ESTABLISH     │
                 │    BATTERY B1    │              │  PARALLEL STATE  │
                 └────────┬─────────┘              └────────┬─────────┘
                          │◄──────────────────────────────┘
                          ▼         ╱─ S186
                 ┌──────────────────┐
                 │      CHARGE      │
                 └────────┬─────────┘
                          ▼
                 ┌──────────────────┐
                 │       END        │
                 └──────────────────┘
```

EP 3 536 543 B1

# FIG. 6

EP 3 536 543 B1

# FIG. 7

PARALLEL STATE

OUTPUT OF VEHICLE

IB

$\frac{IB}{2}$

PCU

B1  B2

BATTERY LOSS $= 2 \times r \times \left(\frac{IB}{2}\right)^2 = \frac{r \times IB^2}{2}$

SOC ADJUSTMENT CONTROL

POWER RUNNING    REGENERATION

OUTPUT OF VEHICLE

IB

PCU

B1  B2

PCU

B1  B2

BATTERY LOSS $= r \times IB^2$

DETERIORATION

EP 3 536 543 B1

# FIG. 8

START

S100 — HAS DC CHARGE START OPERATION BEEN PERFORMED?

YES → S180 — DC CHARGE

NO

S200 — HAS PUSH OPERATION OF SW BEEN DETECTED?

NO → S270 — ESTABLISH PARALLEL STATE

YES

SOC ADJUSTMENT CONTROL

S110 — IS MG SUBJECTED TO POWER RUNNING CONTROL?

NO → S150 — IS MG SUBJECTED TO REGENERATION CONTROL?

YES → S130 — CONNECT ASSEMBLED BATTERY B1

S150 YES → S170 — CONNECT ASSEMBLED BATTERY B2

S150 NO

S250 — HAS CERTAIN TIME ELAPSED?

NO

YES → S260 — CANCELLATION PROCESS

RETURN

EP 3 536 543 B1

# FIG. 9

START

S261
IS DIFFERENCE BETWEEN SOC1 AND SOC2 EQUAL TO OR LARGER THAN PRESCRIBED AMOUNT?
NO
YES

S262
IS MG SUBJECTED TO POWER RUNNING CONTROL?
NO
YES

S266
IS MG SUBJECTED TO POWER RUNNING CONTROL?
NO
YES

S264
CONNECT ASSEMBLED BATTERY B2

S268
CONNECT ASSEMBLED BATTERY B1

S269
ESTABLISH PARALLEL STATE

RETURN

# FIG. 10

START

↓ S100

HAS DC CHARGE START OPERATION BEEN PERFORMED? —— YES

NO ↓ S210

IS DISTANCE FROM DC CHARGER EQUAL TO OR SHORTER THAN PREDETERMINED DISTANCE? —— NO

YES ↓

S180 — DC CHARGE

SOC ADJUSTMENT CONTROL

S110 — IS MG SUBJECTED TO POWER RUNNING CONTROL? —— NO

YES ↓

S130 — CONNECT ASSEMBLED BATTERY B1

S150 — IS MG SUBJECTED TO REGENERATION CONTROL? —— NO

YES ↓

S170 — CONNECT ASSEMBLED BATTERY B2

S270 — ESTABLISH PARALLEL STATE

S250 — HAS CERTAIN TIME ELAPSED? —— NO

YES ↓

S260 — CANCELLATION PROCESS

RETURN

EP 3 536 543 B1

FIG. 11

# FIG. 12

START

↓ S100

YES — HAS DC CHARGE START OPERATION BEEN PERFORMED?

NO ↓ S200

HAS PUSH OPERATION OF SW BEEN DETECTED? — NO

YES ↓

**SOC ADJUSTMENT CONTROL**

S180 — DC CHARGE

S110 — IS MG SUBJECTED TO POWER RUNNING CONTROL? — NO — S150 — IS MG SUBJECTED TO REGENERATION CONTROL? — NO

YES ↓ S130 — CONNECT ASSEMBLED BATTERY B1

YES ↓ S170 — CONNECT ASSEMBLED BATTERY B2

S270 — ESTABLISH PARALLEL STATE

S250 — HAS CERTAIN TIME ELAPSED? — NO

YES ↓ S252 — CONFIRM CONTINUATION OF SOC ADJUSTMENT PROCESS

↓ S254 — IS COMMAND FOR CONTINUATION ISSUED? — YES

NO ↓ S260 — CANCELLATION PROCESS

RETURN

EP 3 536 543 B1

FIG. 13

START

S100 — HAS DC CHARGE START OPERATION BEEN PERFORMED?
— YES → S180 DC CHARGE
— NO ↓

S200 — HAS PUSH OPERATION OF SW BEEN DETECTED?
— NO → S270 ESTABLISH PARALLEL STATE
— YES ↓

SOC ADJUSTMENT CONTROL

S110 — IS MG SUBJECTED TO POWER RUNNING CONTROL?
— NO → S150 — IS MG SUBJECTED TO REGENERATION CONTROL?
— YES ↓ S130 CONNECT ASSEMBLED BATTERY B1
— YES ↓ S170 CONNECT ASSEMBLED BATTERY B2
— NO →

S280 — IS DISTANCE FROM DC CHARGER EQUAL TO OR LONGER THAN PREDETERMINED DISTANCE?
— NO →
— YES ↓ S260 CANCELLATION PROCESS

RETURN

EP 3 536 543 B1

# FIG. 14

EP 3 536 543 B1

# FIG. 15

START

↓ S100

HAS DC CHARGE START OPERATION BEEN PERFORMED? —YES→

↓ NO  S200

HAS PUSH OPERATION OF SW BEEN DETECTED? —NO→

SOC ADJUSTMENT CONTROL

S180 — DC CHARGE

S300 — CONTROL STEP-UP/STEP-DOWN CONVERTER IN SUCH MANNER AS TO SUPPLY ELECTRIC POWER FROM ASSEMBLED BATTERY B1 TO ASSEMBLED BATTERY B2

S250 — HAS CERTAIN TIME ELAPSED? —NO→

↓ YES  S350

CANCELLATION PROCESS

RETURN

EP 3 536 543 B1

# FIG. 16

CANCELLATION
PROCESS

START

S352

IS DIFFERENCE BETWEEN SOC1
AND SOC2 EQUAL TO OR LARGER
THAN PRESCRIBED AMOUNT? — NO

YES

S354

CONTROL STEP-UP/STEP-DOWN
CONVERTER IN SUCH MANNER AS
TO SUPPLY ELECTRIC POWER
FROM ASSEMBLED BATTERY B2
TO ASSEMBLED BATTERY B1

S356

ESTABLISH
PARALLEL STATE

RETURN

# FIG. 17

EP 3 536 543 B1

# FIG. 18

EP 3 536 543 B1

CANCELLATION
PROCESS

( START )

S400

IS DIFFERENCE BETWEEN SOC1
AND SOC2 EQUAL TO OR LARGER
THAN PRESCRIBED AMOUNT?  —NO→

YES

S420

TURN OFF MAIN RELAY 32A AND
TURN OFF MAIN RELAY 32B

S440

TURN ON MAIN RELAY 32A AND
TURN ON MAIN RELAY 32B

( RETURN )

**EP 3 536 543 B1**

**REFERENCES CITED IN THE DESCRIPTION**

**Patent documents cited in the description**

- JP 2017192272 A
- US 2017264108 A1
- US 2017088009 A1